# EUROPEAN PATENT APPLICATION

(11) **EP 1 631 040 A1**
(43) Date of publication of application: **01.03.2006**
(21) Application number: 05255079.5
(22) Date of filing: 17.08.2005
(51) Int. Cl.: H04L 29/06, H04L 29/14, H04L 1/18

(54) **Data retransmission after inactive communication session**

(30) Priority: 18.08.2004 GB 0418398
(71) Applicant: Wecomm Limited, Austin Friars, London EC2N 2HA (GB)
(72) Inventor: Sturrock, Oliver, London W12 8NT (GB); Wentford, Timothy John, Pinner HA5 1NB (GB); Russel, Peter George Fischer, Basingstoke RG22 4TU (GB)
(74) Representative: Chapman, Paul Nicholas

(57) **Abstract**

Re-establishing a transmission of data from a first station to a second station involves pausing transmission of data from a first station to a second station following an indication that a communication session is inactive. The first station receives an indication to the effect that the inactive session has been re-established and that data is to be transmitted then sends only a portion of data that has not been sent.

## Description

### Field of the Invention

The present invention relates to the transmission of data packets over a network.

### Description of the Related Art

Protocols are known for transmitting data over a network, for example an intranet or the Intemet. However, the transmission of real time data (data that must be transmitted to a station very quickly, possibly within milliseconds of its production) over a low-bandwidth network presents problems not addressed by such protocols. In particular, it is necessary to be able to avoid congestion, rather than react to it. However, when a connection is temporarily broken the data waiting to be sent can be very large on re-connection. Sending all of the data could increase congestion to an unwanted level.

### Brief Summary of the Invention

According to an aspect of the present invention there is provided a method of re-establishing a transmission of data from a first station to a second station, comprising the steps of pausing transmission of data from said first station to said second station following an indication that a communication session is inactive; receiving an indication to the effect that the inactive session has been re-established and that data is to be transmitted; and sending from said first station to said second station only a portion of data that has not been sent during said pause in transmission.

### Brief Description of the Several Views of the Drawings

*Figure 1* illustrates a networked environment;
*Figure 2* illustrates a prior art method of supplying data from a server to a terminal over a telephony network;
*Figure 3* shows a prior art graph of data against time;
*Figure 4* illustrates a typical performance of TCP over a mobile telephony network;
*Figure 5* shows a real time data provider shown in *Figure 1*;
*Figure 6* details a real time data server shown in *Figure 5*;
*Figure* 7 details steps carried out by the real time data server shown in *Figure 6;*
*Figure 8* details the contents of the memory shown in *Figure 6*;
*Figure 9* details a session item shown in *Figure 8*;
*Figure 10* details steps carried out during *Figure 7* to execute real time data server instructions;
*Figure 11* illustrates the structure of a typical datagram;
*Figure 12* details an MTP header shown in *Figure 11*;
*Figure 13* details steps carried out during *Figure 10* to transmit datagrams;
*Figure 14* illustrates the process of transmitting data;
*Figure 15* details steps carried out during *Figure 13* to prepare a transactional datagram;
*Figure 16* details steps carried out during *Figure 13* to prepare a streamed datagram;
*Figure 17* details steps carried out during *Figure 10* to perform output buffer processing;
*Figure 18* details steps carried out during *Figure 17* to set an MTP header,
*Figure 19* details steps carried out during *Figure 10* to receive datagrams;
*Figure 20* illustrates the use of an MTP header field to measure connection latency;
*Figure 21* details steps carried out during *Figure 19* to process acknowledgements and state changes;
*Figure 22* details steps carried out during *Figure 21* to process an extended acknowledgement;
*Figure 23* illustrates the reception of a datagram;
*Figure 24* details steps carried out during *Figure 19* to extract the data contained in a received datagram;
*Figure 25* details steps carried out during *Figure 10* to process datagrams placed in the transactional segment buffer,
*Figure 26* details steps carried out during *Figure 10* to process incoming streamed datagrams;
*Figure 27* details steps carried out during *Figure 10* to perform background processing;
*Figure 28* illustrates an extended acknowledgement;
*Figure 29* details steps carried out during *Figure 27* to update the datagram transmission rate;
*Figure 30* details steps carried out during *Figure 10* to perform session maintenance;
*Figure 31* details an application server shown in *Figure 5*;
*Figure 32* details steps carried out by the application server shown in *Figure 31;*
*Figure 33* details the contents of the memory shown in *Figure 32*.
*Figure 34* details instructions executed by a process shown in *Figure 32*;
*Figure 35* details steps carried out during *Figure 34* to send a selective update;
*Figure 36* illustrates examples of providing varying levels of service dependent upon network conditions;
*Figure 37* details a PDA shown in *Figure 5;*
*Figure 38* shows steps carried out by the PDA shown in *Figure 37;*
*Figure 39* details the contents of memory shown in *Figure 38;*
*Figure 40* details steps carried out during *Figure 38* to execute real time application instructions;
*Figure 41* illustrates the calculation of resend latency; and
*Figure 42* details steps carried out during *Figure 40* to negotiate a heartbeat rate.

### Written Description of the Best Mode for Carrying Out the Invention

### Figure 1

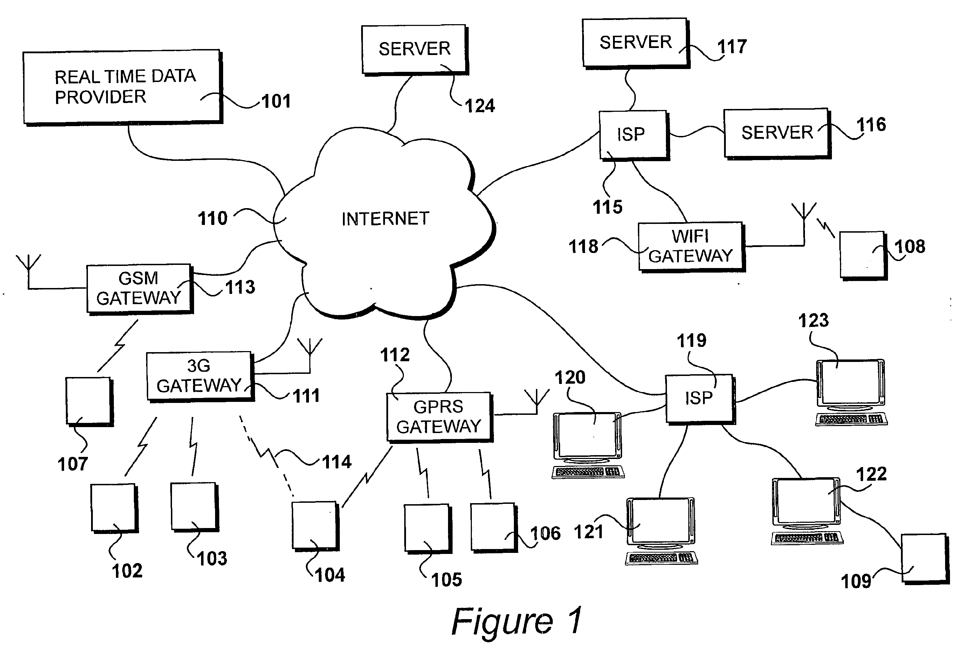

*Figure 1* illustrates a networked environment in which the invention may be used. A Real Time Data Provider **101** provides data to a number of terminal **102, 103, 104, 105, 106, 107, 108** and **109** via the Internet **110.** The data can be separated into at least two types. The first type is streamed data, which comprises updates of certain information that a user of a terminal has indicated that he is interested in. This could be, for example, financial data such as stock prices or exchange rates, sports data such as the latest football scores, news items and so on. A second type of data is transactional data. This comprises any data forming a transaction, which could be a financial transaction such as placing a bid to trade stocks or placing a bet on a sports fixture. Transactional data can also include logging-on or user profile activities.

The data is provided over a variety of networks, including radio networks such as mobile telephony networks or wireless networks. A Third Generation (3G) mobile telephony network, connected to the Internet **110,** includes a gateway **111** which provides connectivity to a network of base stations. Terminals **102** and **103** are each connected to one of these base stations. A General Packet Radio Service (GPRS) gateway **112** is connected to the Internet **110** and provides connection to a network of GPRS base stations. Terminals **104** to **106** are each connected to one of these stations. A GMS gateway **113** is connected to the Internet **110,** providing connectivity for terminal **107.** A terminal could, when possible, switch between connections as shown by dotted line **114.**

Internet Service Provider (ISP) **115** is connected to the Internet **110** and provides intemet access for server **116,** server **117** and a Wireless Network or Wireless Fidelity (WiFi) gateway **118.** Terminal **108** has a link to gateway **118.** ISP **119** is connected to the Internet **110** and provides internet access for computer systems **120, 121, 122** and **123** via wire links. Terminal **109** is connected by an ethemet wire link, possibly using a docking cradle, to computer system **122.** Alternatively, server **124** is connected directly to the Internet **110.**

Thus there is a number of ways in which a terminal may link to the Internet **110** in order to receive data from RTDP **101.** There are, of course, other methods of connection and the rate of technological advance means that in the future there will be further methods. This description should not be construed as limiting connection methods to those described here. However, the number of methods makes the task of providing real time data difficult. While it is, for example, relatively easy to provide data quickly to terminals **108** and **109,** terminals **102** to **107** use relatively low bandwidth, high latency and high variability connections over which it is very difficult to provide real time data.

Mobile telephony systems such as those provided by gateways **111** to **113** are used to provide data. For example, mobile telephone users are able to browse the Internet **110.** However, the rate of data supply can be extremely slow. This is merely inconvenient when browsing. However, if data on the basis of which decisions are to be made is required, for example financial data, it must be provided in a timely fashion. This means that the data should arrive at the terminal quickly, and preferably it should be possible to indicate to a user how up-to-date the information is.

### Figure 2

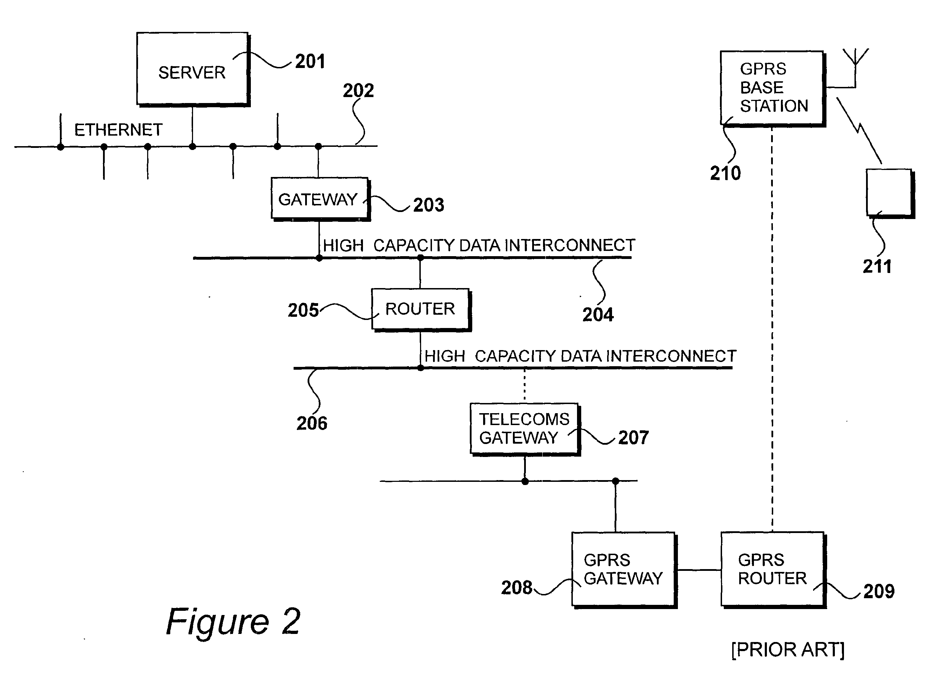

*Figure 2* illustrates a prior art method of supplying data from a server to a terminal over a telephony network. A server **201** on an ethemet network **202** supplies data packets to a first gateway **203,** where the data packets are placed on a high capacity data interconnect **204.** A router **205** receives these packets and supplies them to another network **206.** Eventually the packets arrive at a telecoms gateway **207,** where a telecoms provider can select which of several wireless networks to supply the packets to. A GPRS gateway **208** then supplies the packets to a GPRS router **209,** which routes the packets to the base station **210** to which the terminal **211** is currently connected.

This joumey across several networks is facilitated by the Internet Protocol (IP) which provides a header at the start of every packet defining the destination IP address. Other information is also provided in the IP header, such as the size of the packet, but its primary function is to define an address that gateways and routers can read, and decide where the packet should be sent next. Packets are sent separately, and may end up taking different routes. It is therefore possible for packets to arrive out of order.

In order to maintain a dialogue between server **201** and terminal **211,** an additional protocol must be used. Most commonly, this protocol is the Transport Control Protocol (TCP). This enables a two-way link to be set up between two systems on the Internet **110.** Messages are sent, and TCP provides functionality such as acknowledging and resending data, if necessary, and reordering packets if they arrive in the wrong order. TCP was designed to be used on networks that have a high data capacity and low latency, but can suffer from congestion. However mobile telephony networks have different characteristics and TCP handles certain of these characteristics in an ineffective way.

In the communication chain shown in *Figure 2*, TCP (and other protocols) achieve effective communication across high-capacity parts of the Internet **110.** However, the final link to terminal **211,** over a low-capacity wireless connection, is extremely vulnerable. TCP fails to address these vulnerabilities effectively, since it was not designed for that purpose.

### Figure 3

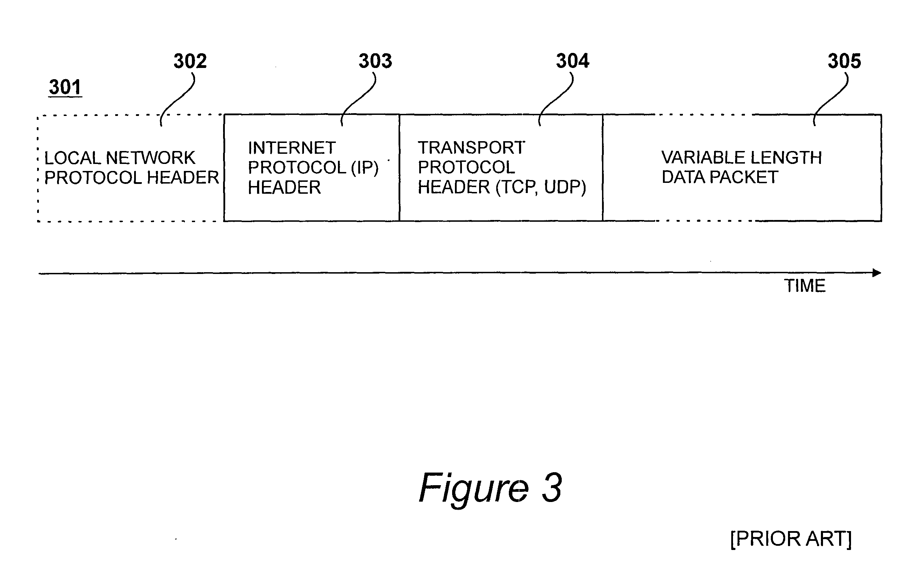

*Figure 3* shows a prior art graph of data against time for packets that are sent over the Internet **110.** Graph **301** illustrates the headers of a packet sent using a transport protocol such as TCP. The Internet **110** comprises many interconnected networks. As a packet is sent over each individual network, a local network protocol header **302** is attached to it, generally to transfer it from one part of the network to another. At the point of exit from the network, the network gateway will strip the local network protocol header **302,** leaving the IP header **303.** From this the next destination on a neighbouring network is determined (the router uses various algorithms to work out the next intermediate destination). The local network protocol header is transient, and changes as the packet traverses the Internet **110.**

The IP header **303** defines the destination IP address for the packet. After this, there is the transport protocol header **304,** which is typically used by the communication client and server to form a connection over which communications can take place. Finally the remainder of the data packet **305** is the data payload. Some packets do not have data, and simply consist of signalling in the transport header **304,** for example an acknowledgement packet that tells the recipient that some data has been successfully received. Typically, though, acknowledgements are combined with data to reduce traffic.

An example of a transport protocol is TCP, as described with reference to *Figure 2*. TCP forms reliable connections and is often combined with higher protocols such as the File Transfer Protocol (FTP) or Hypertext Transport Protocol (HTTP).

### Figure 4

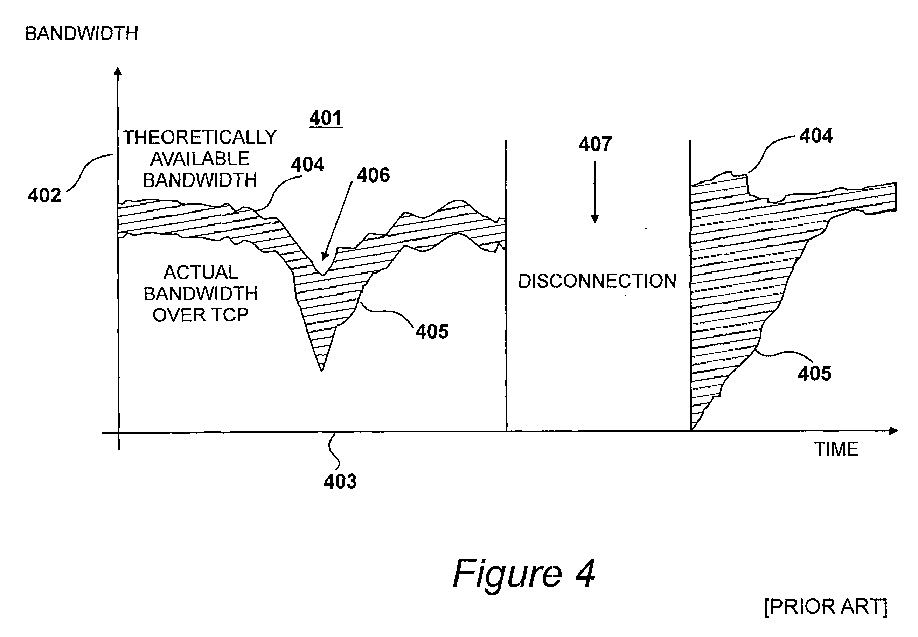

*Figure 4* (prior art) illustrates a typical performance of TCP over a mobile telephony network. Graph **401** plots bandwidth **402** against time **403.** The upper line **404** shows theoretically available bandwidth over the network, while the lower line **405** shows the use made of the bandwidth using TCP.

TCP's performance is always less than 100%. When there are significant changes in network availability, TCP compensates inefficiently, because its underlying mechanisms make assumptions about the network that are invalid for a mobile connection. When bandwidth falls off, for example at point **406,** the amount of data sent using TCP falls much faster, because data packets that have been lost need to be resent, resulting in a downward spiral of lost bandwidth. TCP cannot anticipate or compensate fast enough to avoid such inefficiencies.

When a disconnection occurs, such as at point **407,** TCP takes a long time to re-establish data flow when the link is reconnected. When using a terminal on a mobile telephony network, such disconnections are frequent, for example when the user goes through a tunnel.

TCP presents another problem to real time data provision. When a disconnection takes place (as at point **407),** a wireless service provider will often perform a service known as "IP spoofing". This involves a proxy server being used to maintain the TCP connection with a server, even though the wireless connection is broken. When the connection is re-established data can be sent from where it is cached on the proxy server to the terminal. The telecoms provider does this so that a data transfer can continue, rather than being restarted every time the connection is lost.

This operation is helpful for intemet browsing and downloading of large files to mobile telephones. However, it presents two problems to RTDP **101.** The first is that if the telecoms provider caches a large amount of streamed data and sends it all to a terminal upon reconnection this can overload the connection. This is especially inappropriate given that much of it may be out of date. The second problem is that the RTDP **101** might send transactional data to, for example, terminal **102** while it is disconnected from 3G gateway **110.** The 3G network, spoofing terminal **102,** will acknowledge this data. However, if terminal **102** does not reconnect, which might happen for one of many reasons, then the cached transactional data will never be forwarded. This results in RTDP **101** wrongly concluding that terminal **102** has received the data.

A further problem with TCP is that it is a connection-oriented protocol. When a client moves between wireless base stations its IP address can change, resulting in a requirement to set up a new TCP connection. This can interfere with communications. In particular, a secure transaction could be terminated. This also prevents a terminal from using a higher-bandwidth, lower latency network that may become available without terminating a connection, for example when a terminal connected to GPRS gateway **112** comes within range of 3G gateway **111,** or moves into the radius of a WiFi gateway **118.**

### Figure 5

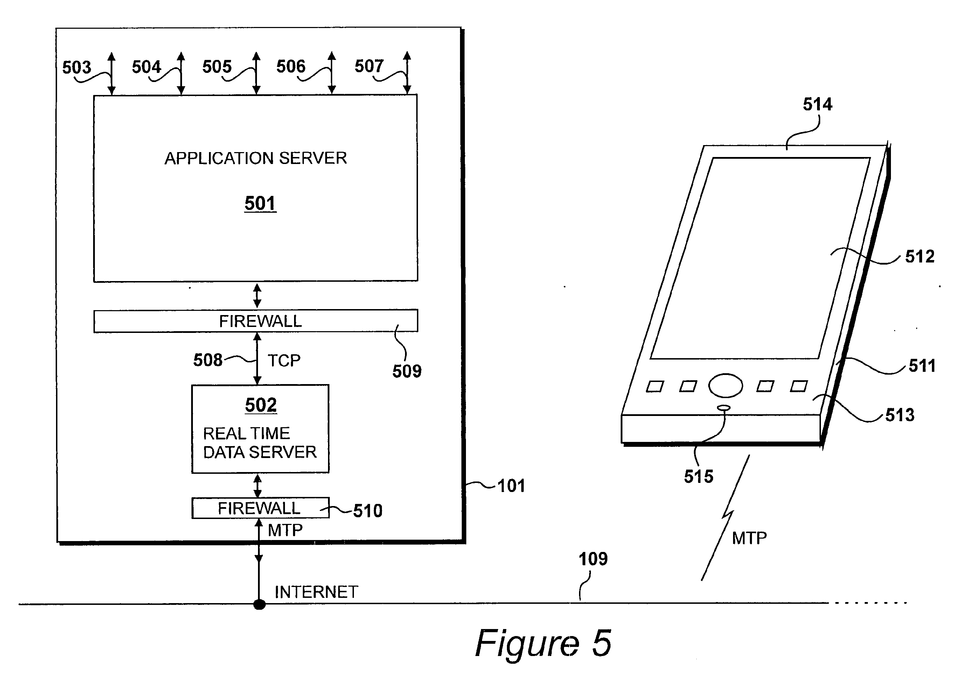

*Figure 5* shows RTDP **101** which comprises an application server **501** and a real time data server **502.** The real time data server communicates with a large number (potentially thousands) of terminals. It facilitates communications between the application server **501** and the terminals. Terminals can have a variety of types of connection, including high speed WiFi or wire. The real time data server **502** manages communications with all these types of connections. A terminal need not be mobile to take advantage of the system.

The application server **501** receives data from a number of data feeds. These are illustrated by two-way arrows, as data is provided to application server **501** but the server may also send information back, for example details of a financial transaction or an information request. Financial transaction services data feed **503** provides communications for making stock-market-based transactions. Sports transaction services data feed **504** provides communications for making sports-based transactions. Financial data feed **505** provides real time updates of, for example, share prices and exchange rates, while sports data feed **506** provides real time updates of sports scores. News data feed **507** provides news headlines and stories. It will be appreciated that the data feeds illustrated in *Figure 5* are representative of the type of data that a Real Time Data Server might provide to clients. Other data types and feeds are contemplated and included in this description.

The application server **501** communicates with the real time data server **502** over an outbound-initiated TCP-based link **508.** The connection between the two systems is made via a high-speed Gigabit Ethemet connection. In other embodiments, the two servers could use the same processing system. However, this provides less security.

The application server **501** is protected by a first firewall **509,** so as to resist any security vulnerabilities that may exist in the real time data server **502,** which has its own firewall **510.** The real time data server **502** takes data from the application server **501** and supplies it to terminals via the Internet **110** using a custom protocol called the Mobile Transport Protocol (MTP). This protocol addresses the needs of real time data services for mobile client terminals.

In the embodiment described herein the terminals are Personal Digital Assistants (PDAs) such as PDA **511.** These are small portable devices including a display screen **512,** control buttons **513,** a speaker **514** and a microphone **515.** The display **512** may be touch-sensitive, allowing the PDA **511** to be controlled using a stylus on the screen instead of buttons **513.** A typical PDA is supplied with software providing the functionality of, inter alia, a mobile telephone, word processing and other office-related capabilities, a calendar and address book, email and internet access, games, and so on. The skilled reader will appreciate that the PDAs illustrated in this document are not the only terminals that can be used. For example, a mobile telephone with enough storage and memory could be used, or other devices which can communicate over mobile telephony networks.

PDA **511** may communicate with the real time data server **502** to obtain access to data provided by any of data feeds **503** to **507,** or to obtain software downloads for installation. The application server **501** facilitates several different types of service. In particular, the efficient provision of multiple types of data having different characteristics is enabled using the custom protocol MTP.

The two main types of data are transactional data and streamed data. For transactional data, a two-way communication between the PDA **511** and the real time data server **502** facilitates the making of a secure transaction. Data delivery must be guaranteed even if a connection is broken. Such data may be several kilobytes for each message, requiring multiple datagrams to be transmitted before a message is complete. These packets, or datagrams, must be reassembled in the right order before use.

Streamed data comprises updates, for example of financial or sporting data. These may be provided at a fixed regular rate, or may be provided at an irregular rate as the data becomes available. Each update or message is contained in a single datagram (although a datagram may contain more than one message). For this reason it is not necessary for streamed datagrams to be ordered at the terminal.

Because of these different data types, each of which has its own issues to be addressed, MTP provides two types of data communication, transactional communication and streamed communication. It facilitates communication of both types over the same communication link. The data types are differentiated, such that the bandwidth utilisation is maximised without compromising transactional communications. It specifically addresses the need for bandwidth efficiency, latency measurement, multiple data types and continuous updates over a low bandwidth, high latency, high variability wireless mobile link. Also, because by its nature a mobile terminal such as a PDA has low storage and memory capabilities, it minimises the computational requirements of the terminal.

### Figure 6

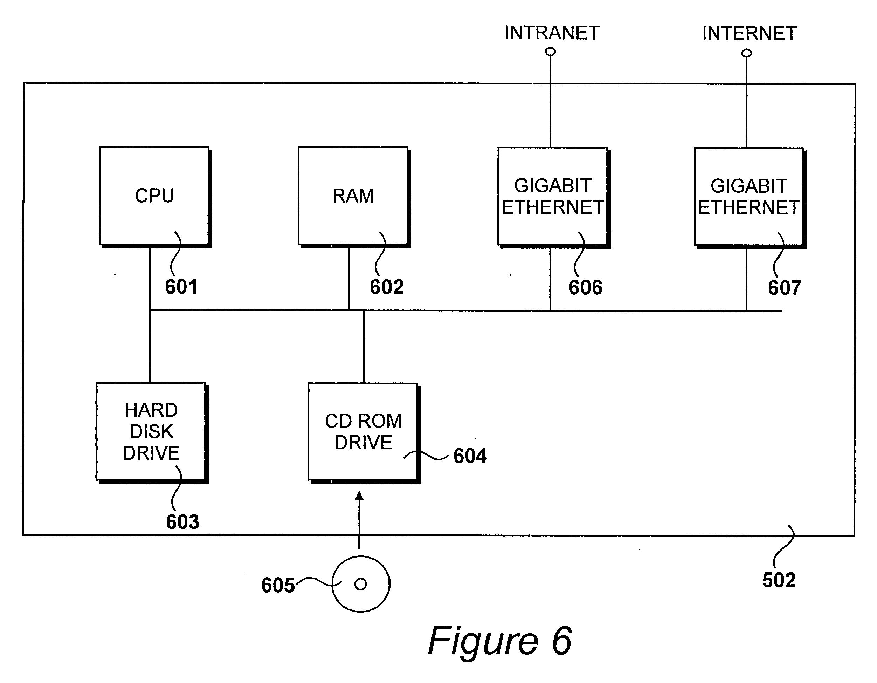

*Figure 6* details real time data server **502.** It comprises a central processing unit (CPU) **601** having a clock frequency of three gigahertz (GHz), a main memory **602** comprising two gigabytes (GB) of dynamic RAM and local storage **603** provided by a 60Gb-disk array. A CD-ROM disk drive **604** allows instructions to be loaded onto local storage **603** from a CD-ROM **605.** A first Gigabit Ethernet card **606** facilitates intranet connection to the application server **501.** The intranet can also be used for installation of instructions. A second Gigabit Ethernet card **607** provides a connection to Internet **110** using MTP.

### Figure 7

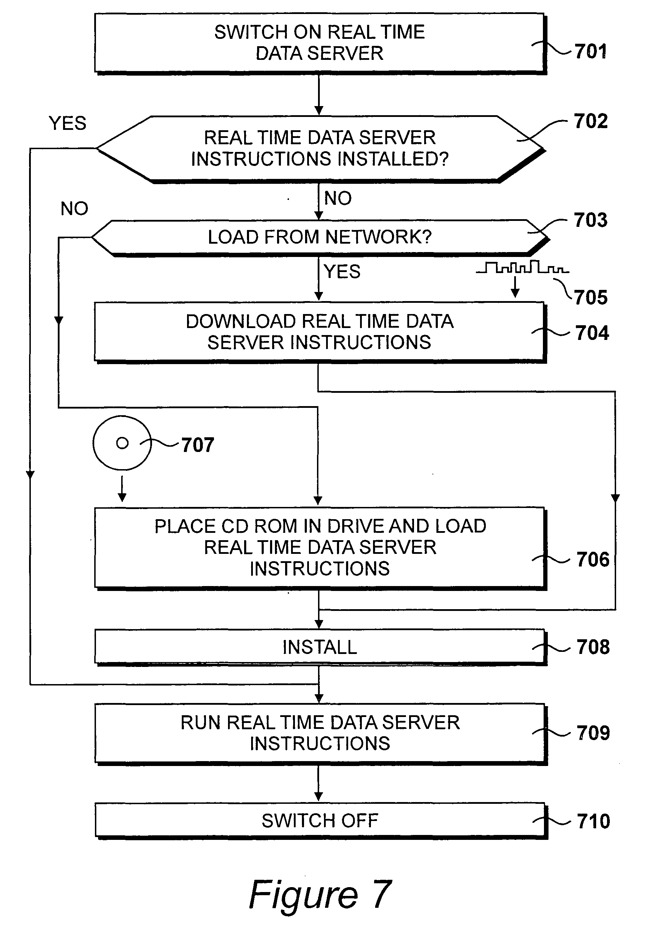

*Figure 7* details steps carried out by real time data server **502.** At step **701** the real time data server **502** is switched on and at step **702** a question is asked as to whether the necessary instructions are already installed. If this question is answered in the negative then at step **703** a further question is asked as to whether the instructions should be loaded from the intranet. If this question is answered in the affirmative then at step **704** the instructions are downloaded from a network **705.** If it is answered in the negative then at step **706** the instructions are loaded from a CD-ROM **707**.

Following either of steps **704** or **706** the instructions are installed at step **708.** At this point, or if the question asked at step **702** is answered in the negative, the instructions are executed at step **709.** At step **710** the real time data server is switched off. In practice this will happen very infrequently, for example for maintenance.

### Figure 8

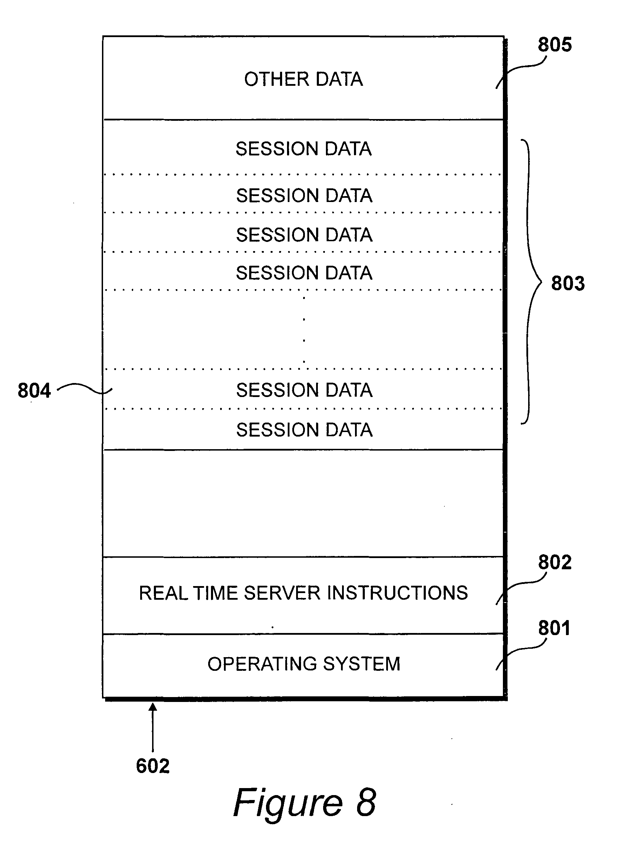

*Figure 8* details the contents of memory **602** during the running of real time data server **502.** An operating system **801** provides operating system instructions for common system tasks and device abstraction. The Windows™ XP™ operating system is used. Alternatively, a Macintosh™, Unix™ or Linux™ operating system provides similar functionality. Real time data server instructions **802** include MTP instructions and instructions for providing MTP status information to the application server **501.** Session data **803** comprises the details of every session, such as session item **804,** currently maintained by the server **502.** Each client terminal that is currently logged on has a session, and when a session starts an area of memory is allocated to it in which variables, specific to each user, are stored. Other data includes data used by the operating system and real time data server instructions.

### Figure 9

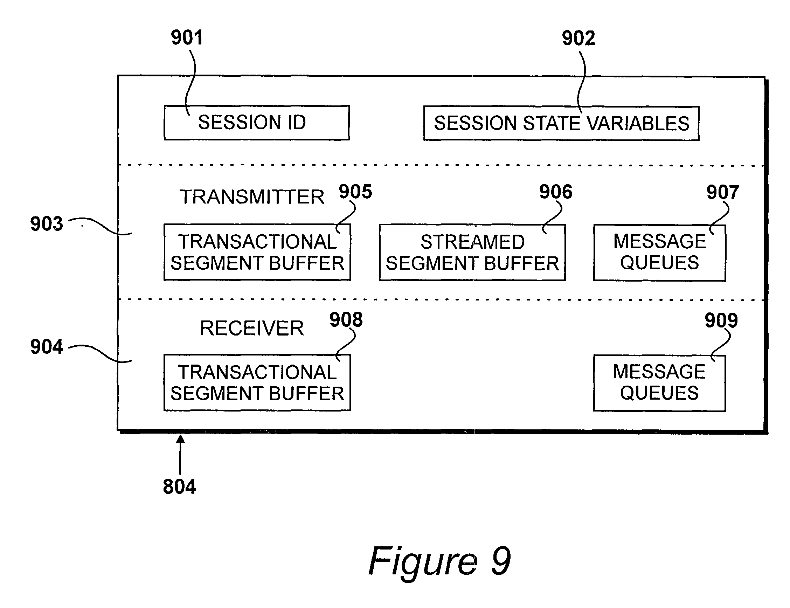

*Figure 9* details an individual session item **804** shown in *Figure 8.* Each session item includes a session ID **901** and session state variables **902,** indicating whether the session is starting, ongoing, stalled, reconnecting or disconnecting. Each item also includes transmitter data **903** and receiver data **904,** since MTP provides two-way communication. Transmitter data **903** includes a transactional segment buffer **905,** a streamed segment buffer **906** and prioritised message queues **907.** Receiver data **904** includes a transactional segment buffer **908** and prioritised message queues **909.**

### Figure 10

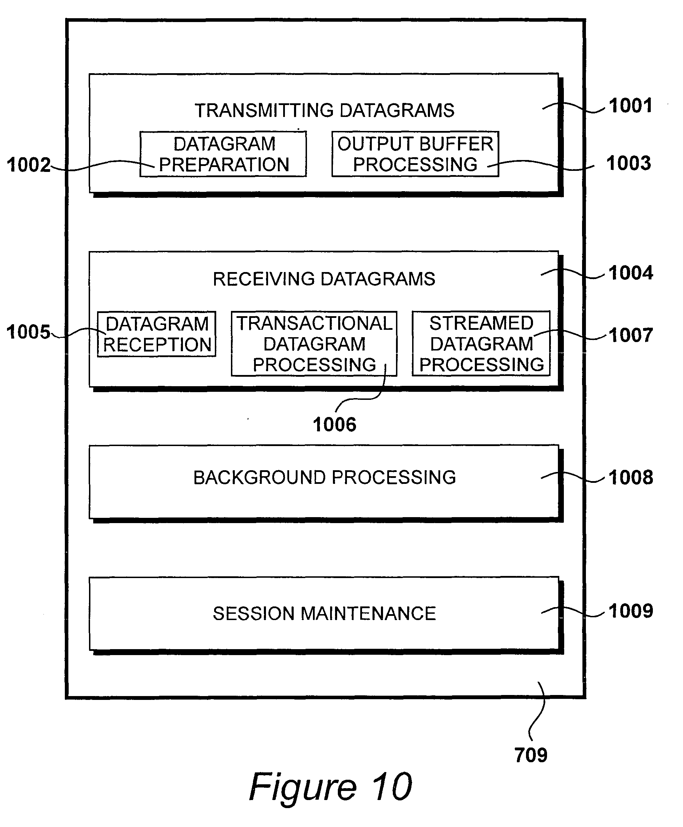

*Figure 10* illustrates step **709** at which the real time data server instructions are executed. This step comprises a number of separate processes that effectively occur in parallel. The concurrency of these processes is achieved by a mixture of concurrent threads and sequential processing, details of which will be known to those skilled in the art. In particular, although the processes may be described in terms of communications with a single client, PDA **511,** they should be understood to be relevant to all the clients that the real time data server **502** is communicating with.

Process **1001** transmits datagrams from the real time data server **502** to a client **511.** Each packet includes an IP header, a UDP header and an MTP header. For convenience each packet is referred to as a datagram. Process **1001** comprises two separate processes: datagram preparation **1002** and output buffer processing **1003.** Process **1002** prepares data for transmission. Data received from application server **501** can be from several applications having different data characteristics and priorities and it must be processed before it can be sent to terminals such as PDA **511.**

Process **1004** receives datagrams from client terminals such as PDA **511** and comprises three separate processes: datagram reception **1005,** transactional datagram processing **1006** and streamed datagram processing **1007.**

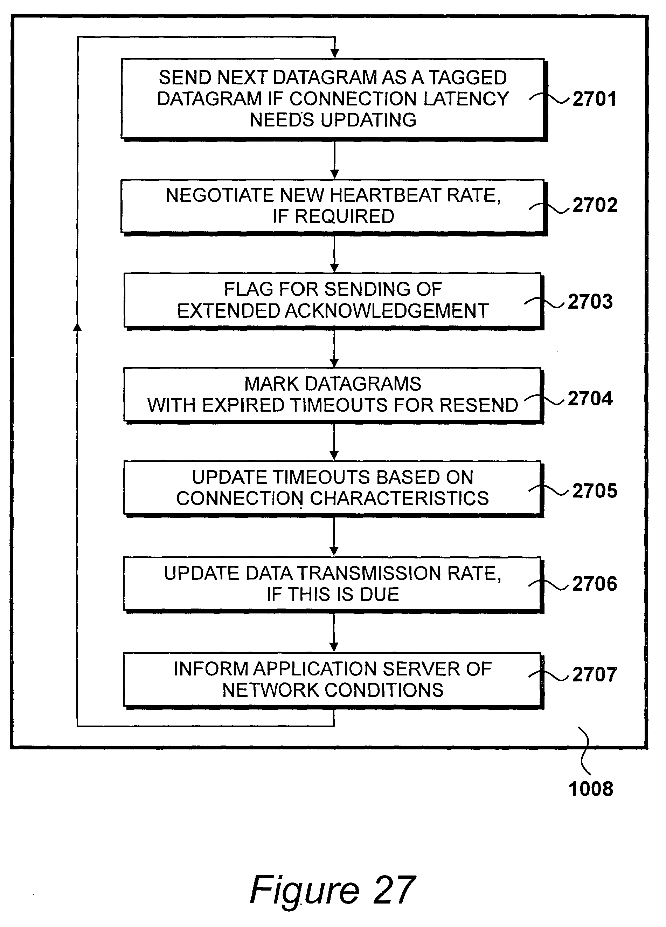

Process **1008,** which will be described further with reference to *Figure 27*, performs background processing, which includes various processes required to be performed while transmitting and receiving data, such as identifying timeout conditions.

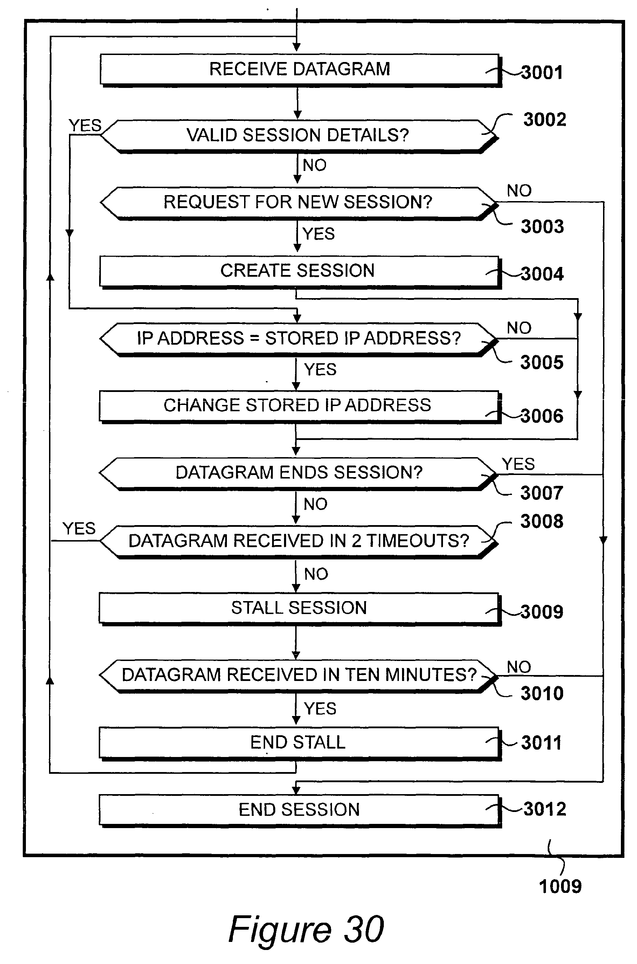

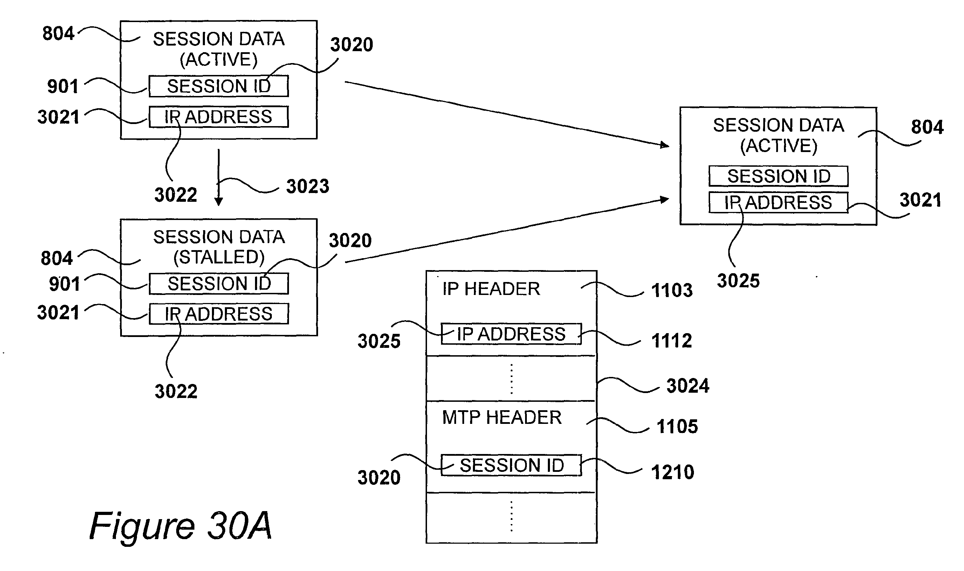

Process **1009** provides session maintenance, which includes operations performed when PDA **511** is temporarily disconnected. This process, which will be described further with reference to *Figure 30,* is the first to start, with processes **1001, 1004** and **1008** being performed once the user session is established.

### Figure 11

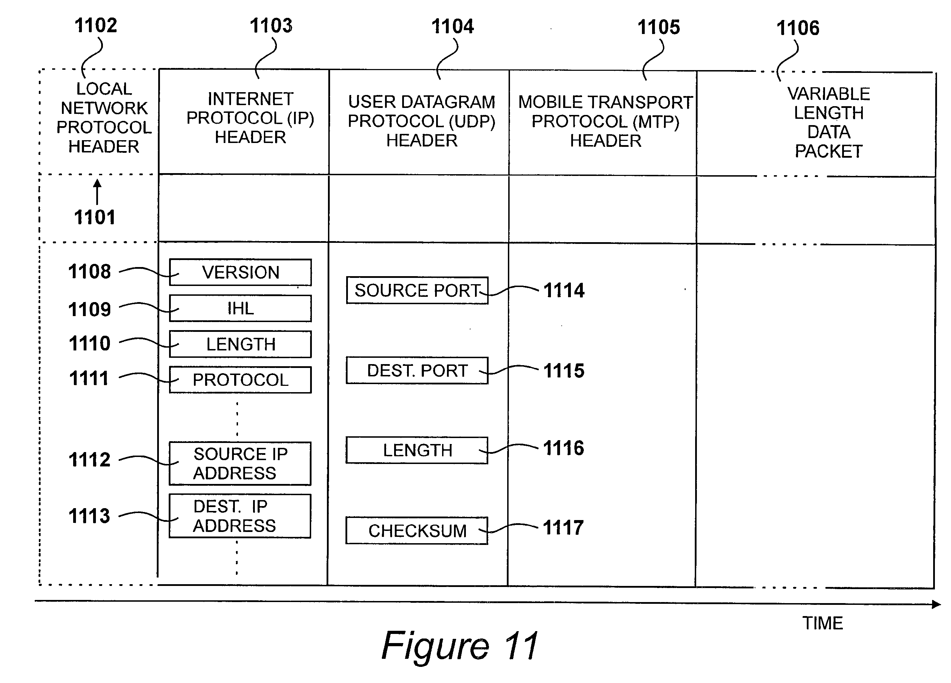

*Figure 11* illustrates the structure of a typical datagram **1101** sent between the real time data server **502** and PDA **511.** A local network protocol header **1102** changes as the datagram passes from network to network across the Internet **110.** An IP header **1103** defines the destination of the packet, as well as other characteristics. A UDP header **1104** precedes an MTP header **1105,** which implements several features for efficiently supplying real time data to clients over mobile wireless links, as well as other data links of varying degrees of quality. The MTP header **1105** is followed by data **1106** that has a maximum length, in this embodiment, of approximately 500 bytes. This limit is chosen to avoid packet fragmentation and to avoid overloading the terminals, and could be varied.

The IP header **1103** includes several fields. Version field **1108** indicates the version of IP being used, for example IPv4 or IPv6. Internet Header Length field **1109** indicates the length, in 32-bit words, of the IP header. Its minimum value is 5. Length field **1110** gives the total length, in bytes, of the datagram, including the IP header (but not including the local network protocol header **1102).** Protocol field **1111** is set to a value indicating that UDP is being used. Source IP address field **1112** gives the return address of the datagram, while destination IP address field **1113** gives its destination.

The UDP header **1104** has the following fields. Source port field **1114** gives the port on the computer sending the datagram, while destination port field **1115** gives the port number on the computer receiving the datagram. Length field **1116** gives the length of the datagram in bytes, including the UDP header but not including the previous headers **1102** and **1103.** Checksum field **1117** contains a value computed from the IP header **1103,** UDP header **1104** and the remainder of the datagram, enabling data integrity to be confirmed.

### Figure 12

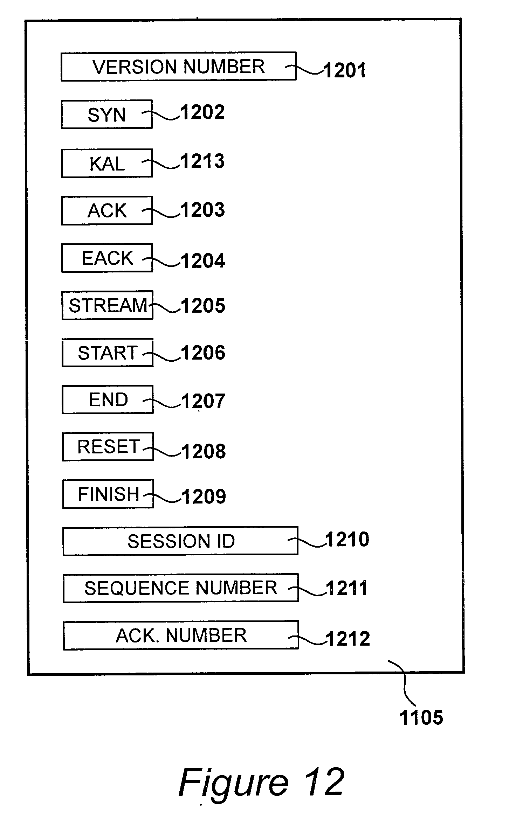

*Figure 12* details MTP header **1105.** It contains a number of fields. Firstly, version number field **1201** gives the version of MTP being used.

Fields **1202** to **1209** are single-bit fields that are considered to be "set" if their value is one, and not set if it is zero. SYN field **1202** and KAL field **1213** are used for signalling. At the start and end of a session, SYN field **1202** is used for handshaking, but it is also used to perform various connection timing procedures. KAL field **1213** is used to send "keep alive" datagrams that indicate that a connection is open. ACK field **1203** indicates that the datagram is being used to acknowledge a received datagram, while EACK field **1204** indicates an extended acknowledgement. STREAM field **1205** is used to differentiate between streamed and transactional data. When set, it indicates that the datagram contains streamed data.

START field **1206** and END field **1207** are used to indicate that a datagram contains data and that it is the first or last of a set. If a datagram is too large to be sent as a single datagram then it may be split, and so START field **1206** indicates the first datagram and END field **1207** indicates the last. A datagram that has not been split has both fields set. An empty datagram does not have these fields set.

RESET field **1208** is used for session handshaking when restarting a session, and FINISH field **1209** is used to close an MTP session.

Session ID field **1210** is a number indicating which session the MTP datagram relates to. Sequence number field **1211** is a number indicating the datagram sequence. Each datagram that is sent out and that requires acknowledgement is given its own effectively unique number, which is then used in an acknowledgement by the client. (Since streamed and transactional datagrams are numbered using a different sequence, and since the sequence numbering loops at a number that is greater than the number of acknowledgements that will be outstanding at any time, the sequence number is not strictly unique but is effectively unique.) An acknowledgement is itself a datagram, which may contain data, and so acknowledgement number field **1212** is the sequence number of the datagram being acknowledged in a datagram that has the ACK field **1203** set. This datagram is probably otherwise unconnected with the datagram being acknowledged.

### Figure 13

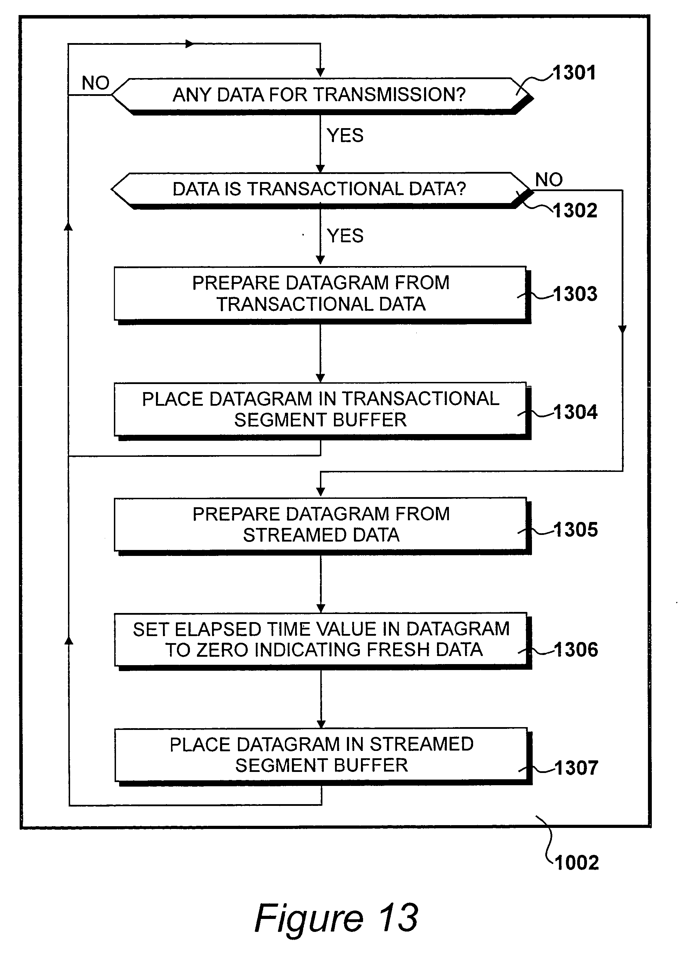

*Figure 13* details process **1002** at which datagrams are transmitted. Process **1001** comprises two, effectively concurrent processes **1002** and **1003.** Process **1002** fills up the transactional and streamed segment buffers **905** and **906,** while process **1003** looks in the buffers and marks the datagrams for sending.

Process **1002** commences with step **1301** at which a question is asked as to whether there is any data for transmission. If this question is answered in the affirmative then a further question is asked at step **1302** as to whether the data is transactional data. If this question is answered in the affirmative then at step **1303** a datagram is prepared and at step **1304** it is placed in the transactional segment buffer **905.** Alternatively, if the question asked at step **1302** is answered in the negative, a datagram of streamed data is prepared at step **1305.** The elapsed time value in the datagram is set to zero, indicating fresh data, at step **1306** and at step **1307** the datagram is placed in the streamed segment buffer **906.**

Following steps **1303** or **1307,** or if the question asked at step **1301** is answered in the affirmative, control is returned to step **1301** and the question is asked again as to whether there is any data for transmission.

### Figure 14

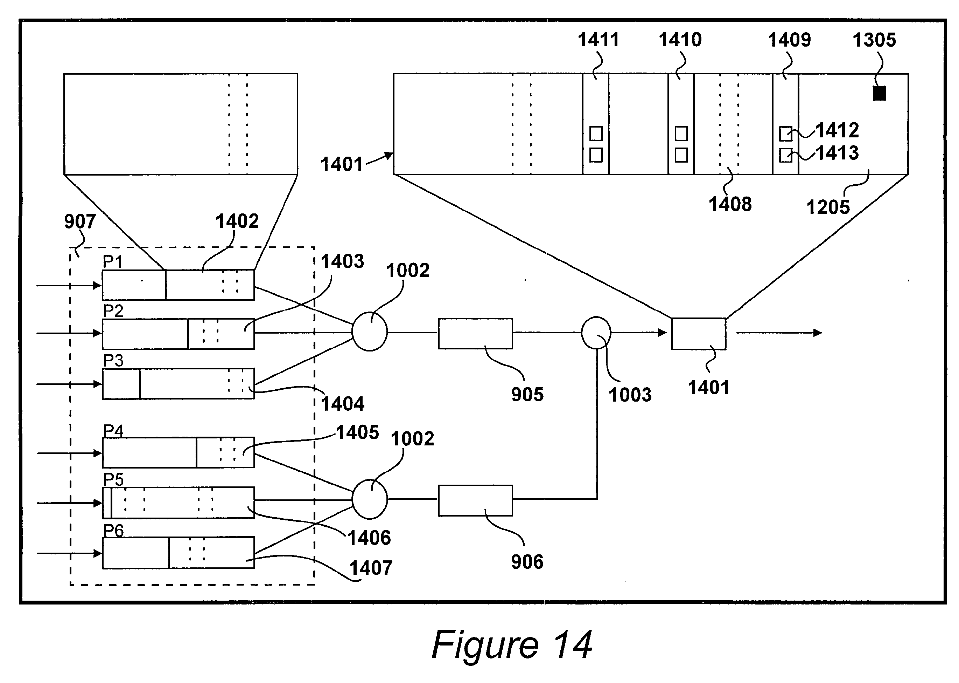

*Figure 14* illustrates the process performed during steps **1303** to **1307,** in which data is prepared for transmission. A datagram **1401** can comprise transactional data or streamed data, which is determined by whether or not STREAM field **1205** is set in the MTP header **1105.** Each of the two types of data has its own buffer, transactional segment buffer **905** and streamed segment buffer **906,** from which datagrams are sent. Once acknowledged, a datagram can be deleted from its location in segment buffer **905** or **906.** Each segment buffer stores a number of datagrams.

Transmission is facilitated by supplying a datagram to the operating system **801,** which facilitates its electronic transmission using the Internet Protocol.

Transactional and streamed datagrams are generated from data stored in prioritised message queues **907.** This data is supplied to message queues **907** by applications running on application server **501.** An application may supply all its outgoing messages to a particular message queue, or may pass messages to different queues depending upon the nature of the data.

Transactional data is supplied to prioritised message queues **1402, 1403** and **1404.** Streamed data is supplied to prioritised message queues **1405, 1406** and **1407.** Each message queue may contain a number of messages supplied from applications on application server **501.** These messages are delineated by level one message headers, such as header **1408,** that specify the length of the data and the application from which it was supplied.

The amount of data taken from each message queue and combined into a single datagram depends upon proportions defined for each message queue. For example, default proportions of fifty percent, thirty percent and twenty percent may be assigned to prioritised message queues **1405** to **1407** respectively. If message queue **1407** has no data then its allocation will be equally reallocated between queues **1406** and **1407,** giving queue **1408** thirty-five percent and queue **1407** sixty-five percent. If only one queue contains data then it will have one hundred percent of the allocation.

The way the data is allocated also depends upon the type of message queue. Transactional messages may be broken up over a number of datagrams, and so the process only considers the amount of data in the queue. However, streamed messages must be wholly contained within one datagram, and so only entire messages are taken from these message queues, even if this means that the message queue's priority allocation is not used up.

Datagrams are created from the message queues and placed in segment buffers **905** and **906.** These are then sent, with the first message being taken from each segment buffer in turn.

The example in *Figure 14* shows datagram **1401,** which is made up from transactional data. The amount of data that can be included in the datagram is calculated, and data is taken from each of queues **1402** to **1404** according to their priority levels. Data from different prioritised message queues is delineated within a datagram by level two message headers, such as headers **1409, 1410** and **1411.** These headers include a length field **1412** and a message queue field **1413.**

Thus the example datagram **1401** does not contain a single message but in fact contains portions of five messages, since the data from each of queues **1402** to **1404** includes a message header and thus includes the end of one message and the beginning of another.

The number of prioritised message queues shown here and their proportions are provided as an example only. There could be fewer queues, for example only one transactional queue and two streamed queues, or any other number. The proportions will vary according to the kinds of real time data provided and the realities of each individual system. Additionally, it is not necessary that unused allocation be equally divided between the remaining queues. It could be divided according to their own allocations, or in some other way.

### Figure 15

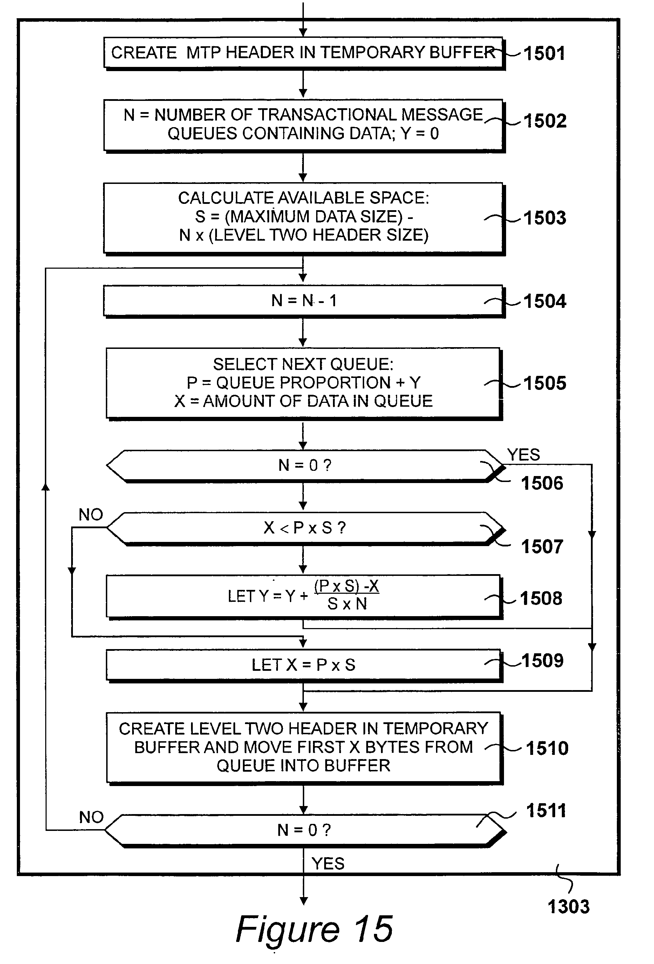

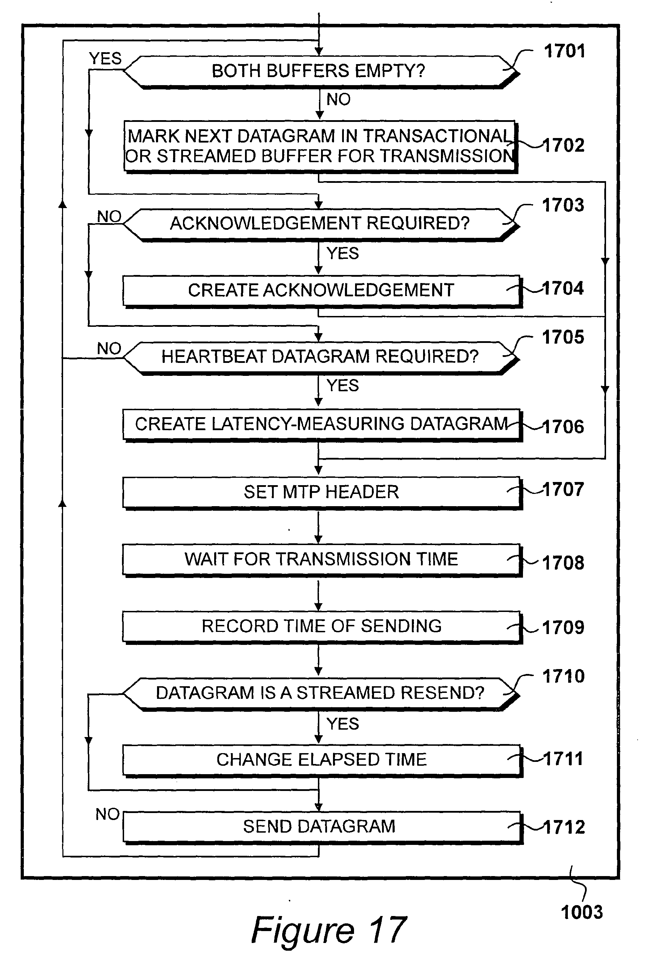

*Figure 15* details step **1303,** at which a transactional datagram is prepared. At step **1501** an MTP header is created in a temporary buffer. This is a default header that as yet does not contain any information specific to the datagram being considered. This information is added by buffer processing process **1003,** which will be described with reference to *Figure 17*. At step **1502** a variable N is set to be the number of transactional prioritised message queues **1402** to **1404** that contain data, and a variable Y is initialised to zero. At step **1503** the number of bytes available for data, indicated by variable S, is calculated by subtracting the product of N and the level two header size from the maximum data size. For example, the maximum data size may be 500 bytes.

At step 1504 the variable N is decremented by one and at step **1505** the highest message queue is selected. A variable P is set to be the sum of the proportion of the datagram that the data in that queue may use, for example 0.3 for queue P1, and variable Y (zero on the first iteration), and a variable X is set to be the amount of data, in bytes, in the queue. At step **1506** a question is asked as to whether the variable N is equal to zero. If this question is answered in the affirmative then the queue under consideration is the last one containing data and so the following steps need not be carried out, control being directed to step **1513.**

However, if it is answered in the negative then at step **1507** a further question is asked as to whether the variable X is less than the product of the variables S and P; that is, whether the amount of data in the queue is less than the amount of data that may be used. If this question is answered in the affirmative then at step **1508** the variable Y is calculated as the variable X subtracted from the product of P and S, all divided by the product of S and N, all added to the previous value of Y. Thus Y is a proportion that is to be added to the proportions of the remaining queues in order to allocate to them the unused space allocated to the queue under consideration. For example, if the available space is 400 bytes and all three queues contained data, then P1 is allocated 120 bytes. If it only contained 100 bytes then a further 10 bytes would be allocated to each of the remaining queues. Y would thus be 0.05. Alternatively, if the question asked at step **1507** is answered in the negative, to the effect that the variable X is not less than the product of X and S, then at step **1509** the variable X is set to be the product of the variables P and S.

Following either step **1508** or step **1509,** or if the question asked at step **1506** is answered in the affirmative, at step **1510** a level two header is created in the temporary buffer and the first X bytes are moved from the queue into the temporary buffer. The question is then asked at step **1511** as to whether the variable N is equal to zero. If this question is answered in the negative then control is then returned to step **1504** where N is decremented again before the next queue is selected. If it is answered in the affirmative then step **1303** is over and a datagram has been prepared. The step at **1304** of placing this datagram in the transactional segment buffer **905** consists of moving the data from the temporary buffer to he transactional segment buffer **905.**

### Figure 16

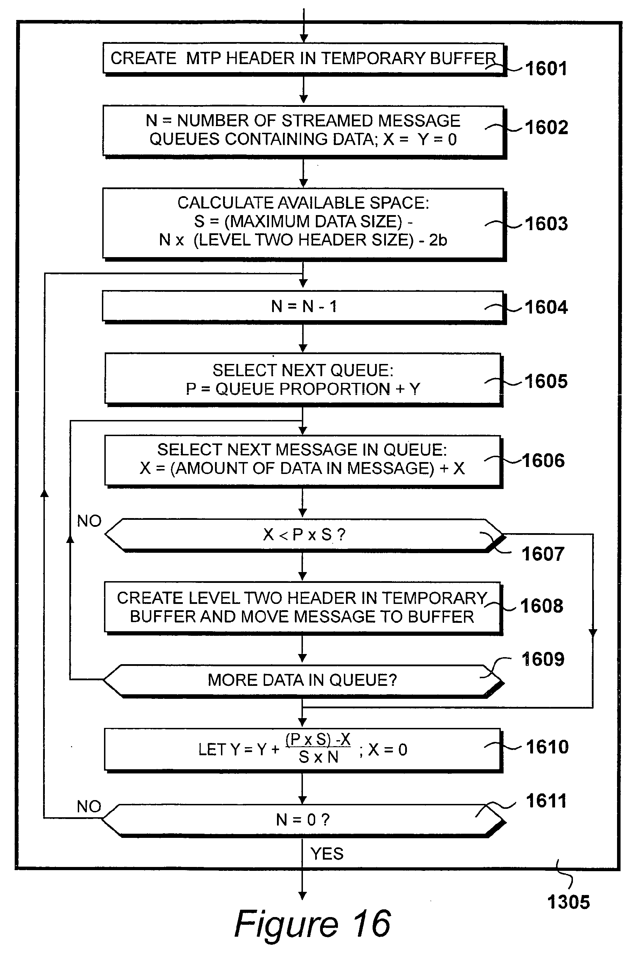

*Figure 16* details step **1305,** at which a streamed datagram is prepared from the data in streamed prioritised message queues **1405** to **1407.** At step **1601** an MTP header is created in a temporary buffer, and at step **1602** a variable N is set to be the number of streamed message queues that contain data, while variables X and Y are set to be zero.

At step **1603** the available space S is calculated in the same way as at step **1503,** except that a further two bytes are subtracted, which will be used to store the elapsed time. At step **1604** the variable N is decremented by one.

At step **1605** a level two header is created in the temporary buffer, and at step **1606** the first message queue is selected, and a variable P set to be the sum of the queue's priority proportion and the variable Y. At step **1607** the first message in the queue is selected, and the variable X is set to be the sum of the message's length in bytes and the previous value of X. At step **1608** a question is asked as to whether the variable X is less than the product of the variables P and S.

If this question is answered in the affirmative then at step **1609** the message is moved to the temporary buffer and a further question is asked as to whether there is more data in the queue. If the question is answered in the negative then control is returned to step **1607** and the next message is selected.

If the question asked at step **1608** is answered in the affirmative, or the question asked at step **1610** is answered in the negative, then at step **1611** the variable X is reset to zero, and the variable Y is updated to be the previous value of the variable X subtracted from the product of P and S, all divided by the product of S and N, all added to the previous value of Y. A question is then asked at step **1612** as to whether N is equal to zero. If this question is answered in the negative then control is returned to step **1604.** If it is answered in the affirmative then step **1605** is concluded.

Thus only entire messages are included in a streamed datagram, although more than one message may be contained in a single datagram. A streamed datagram may contain more than one message from a single queue, as long as it does not exceed its priority allocation, but may not contain a fragment of a datagram.

As discussed above, the algorithm presented in *Figure 15* and *Figure 16* is only one possibility for prioritising data.

Additionally, in another embodiment (not shown) this prioritisation and mixing of data does not take place. In that embodiment datagrams only contain data from a single application, and the START field **1206** and END field **1207** are used to indicate the beginning and end of messages, instead of the level one headers described with reference to *Figure 14.*

### Figure 17

Output buffer processing **1003** is detailed in *Figure 17.* At step **1701** a question is asked as to whether both the transactional segment buffer **905** and the streamed segment buffer **906** are empty, and if this question is answered in the negative then the next datagram to be sent in either buffer **905** or **906** is marked for transmission (the process alternates between the two buffers) at step **1702.** This may be the next newest datagram, or it may be an unacknowledged datagram that has been marked to be resent.

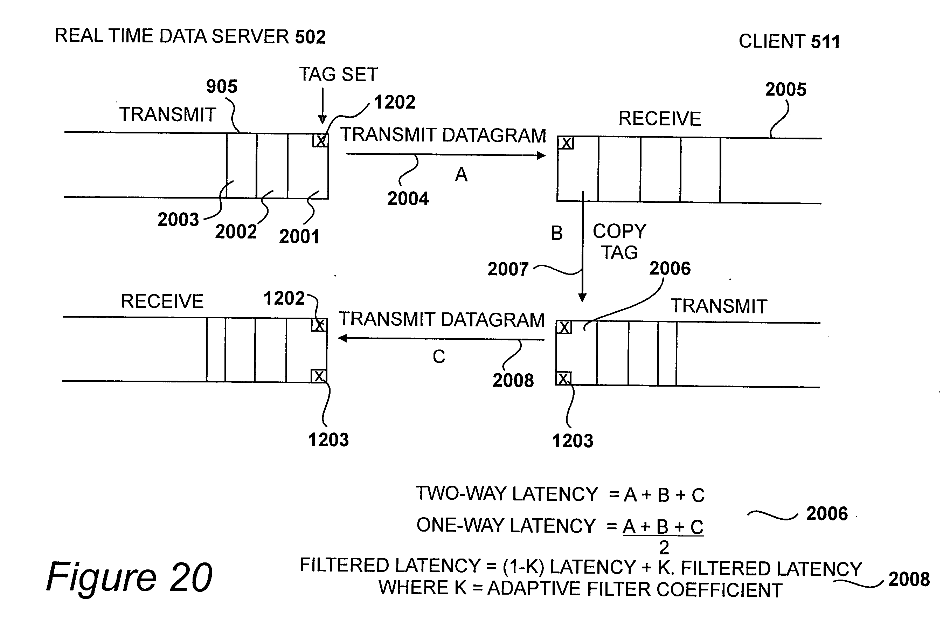

If the question asked at step **1701** is answered in the negative then at step **1703** a further question is asked as to whether an acknowledgement is required. If this question is answered in the affirmative then at step **1704** an empty acknowledgement datagram is created. If the question asked at step **1703** is answered in the negative then at step **1705** a further question is asked as to whether a heartbeat datagram is required, and if this question is answered in the affirmative then a latency-measuring datagram is produced at step **1706** (this will be described more fully with reference to *Figure 20*). If the question asked at step **1705** is also answered in the negative then control is returned to step **1701** and the question is asked again as to whether the buffers are empty.

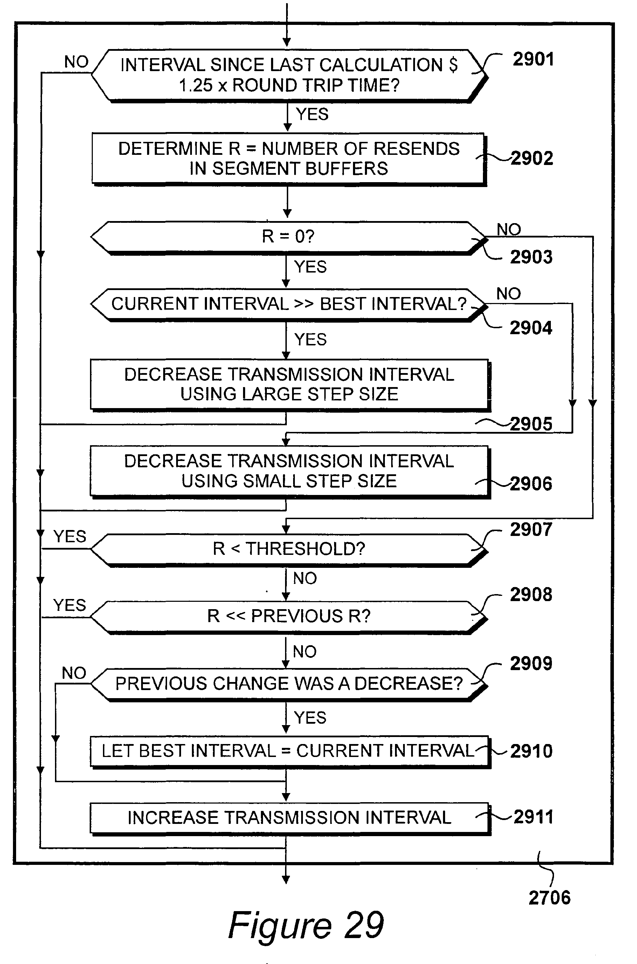

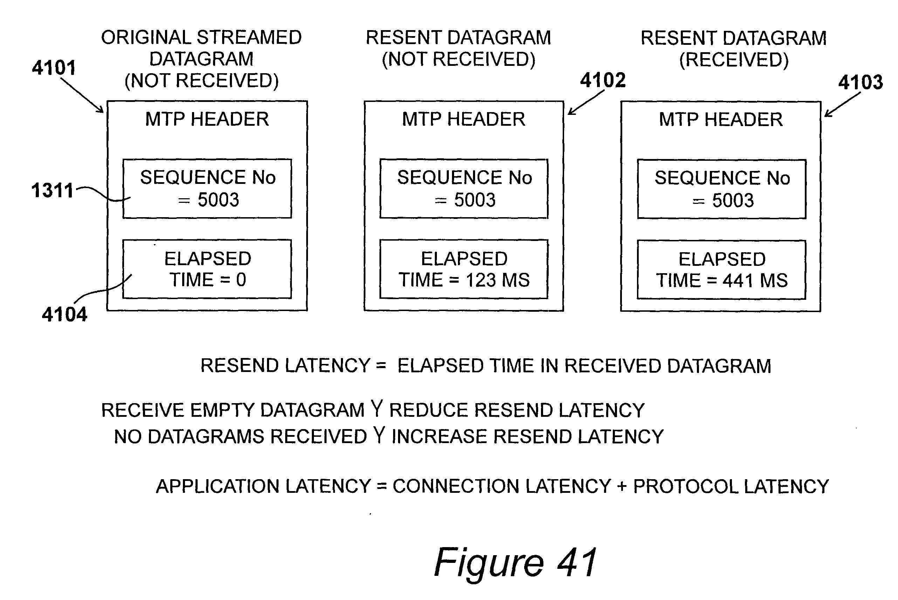

Following any of steps **1702, 1704** or **1706,** the MTP header as described in *Figure 12* is set at step **1707.** At step **1708** the process waits for a transmission time, since the rate of datagram transmission is controlled, as will be described with reference to *Figure 29*. When this transmission time is reached, the time of sending is internally recorded for the purposes of delaying the next transmission. It is recorded with the datagram stored in the segment buffer, along with an indication of how many times the datagram has already been sent. At step **1710** a question is asked as to whether this datagram is being resent and is also a datagram containing streamed data, as indicated by the setting of both STREAM field **1205** and START field **1206;** if so the elapsed time is changed at step **1711** to reflect the amount of time since the first attempt at sending the datagram, as can be calculated from the time of the last sending and any previous value of the elapsed time. This is to faciliate the calculation of resend latency, as will be described with reference to *Figure 41.* Finally, at step **1712,** the datagram is sent.

### Figure 18

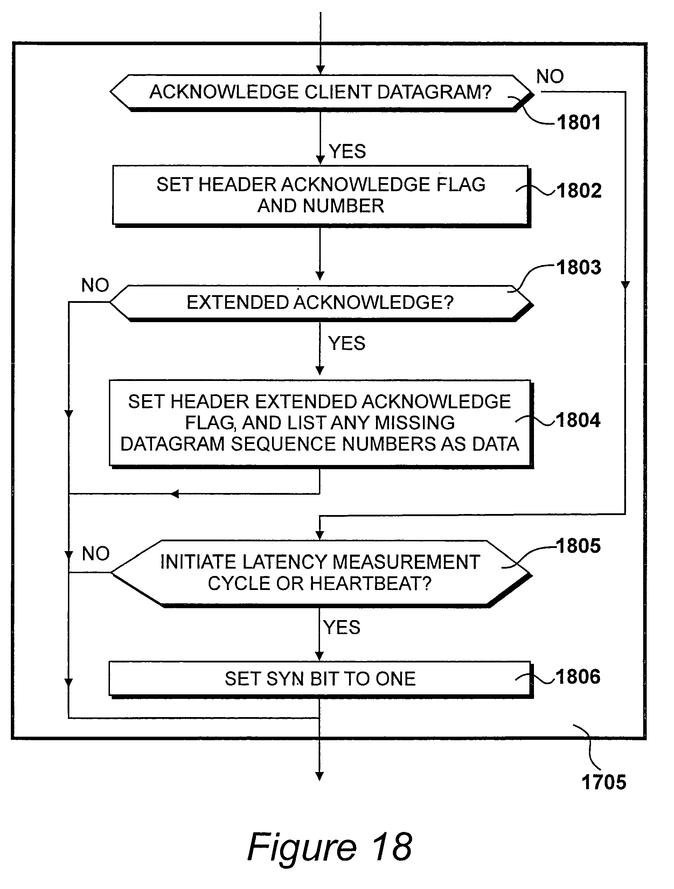

*Figure 18* details step **1705,** at which the MTP header is set. At step **1801** a question is asked as to whether there is a datagram received from the client that needs to be acknowledged. The answer to this question depends not only on whether a datagram has been received from PDA **511** but also what kind of datagram it is. A datagram containing transactional data is acknowledged immediately, as is any datagram being used for timing purposes, and so if either of these have been received but not acknowledged the question is answered in the affirmative. Streamed data, being less critical, is acknowledged using an extended acknowledge, in which multiple packets are acknowledged in order to lower network traffic. Thus if only streamed datagrams have been received then the question will be answered in the affirmative only if a suitable period of time has elapsed. Otherwise, or if no datagrams have been received at all, the question is answered in the negative.

If the question asked at step **1001** is answered in the affirmative then at step **1802** ACK field **1203** is set and the sequence number of the datagram being acknowledged is entered in acknowledgement number field **1212.** At step **1803** a question is asked as to whether this acknowledgement is an extended acknowledgement. If this question is answered in the affirmative then at step **1804** the EACK field **1204** is also set, and any datagrams that have not been received but have lower sequence numbers than the sequence number contained in field **1212** are listed as data in part **1106** of the datagram. Thus these datagrams are negatively acknowledged. Since the IP header **1103** and UDP header **1104** both contain length fields indicating the total length of the datagram the recipient of an extended acknowledgement knows implicitly how many datagrams are being negatively acknowledged. At this point, and if the question asked at step **1803** is answered in the negative, step **1705** is completed. (Note that because transactional datagrams have a separate sequence number from streamed datagrams, the extended acknowledgement process does not interfere with the acknowledgement of transactional datagrams.)

However, if the question asked at step **1801** is answered in the negative, to the effect that an acknowledgement is not due, at step **1805** a further question is asked as to whether a latency measurement or heartbeat should be initiated. If this question is answered in the affirmative then at step **1806** SYN field **1202** is set to one. A datagram having this field set initiates a latency measurement. When an acknowledging datagram is received from PDA **511** it is used to measure round-trip latency (further described with reference to *Figure 17*). (Thus the SYN field cannot be set in an acknowledging datagram. For this reason step **1805** is only initiated if the question asked at step **1801** is answered in the negative.) Alternatively, if no data is being sent, a datagram having this field set, in addition to being used to measure latency, provides a heartbeat that confirms that the connection is still open.

Following step **1806,** or if the question asked at step **1805** is answered in the negative, step **1705** is completed.

This figure highlights one of the few ways in which the server and the client are not symmetrical. While a session is stalled, the server will not send heartbeat datagrams, but the client will. This is because the receipt of a datagram from the client by the server ends the stall. This is provided by the suspension of background processing process **1008,** which makes the decision as to whether to send a heartbeat datagram, during a stalled session. However, process **1003** sends the datagram, if instructed to, in exactly the same way on both the server and the client.

### Figure 19

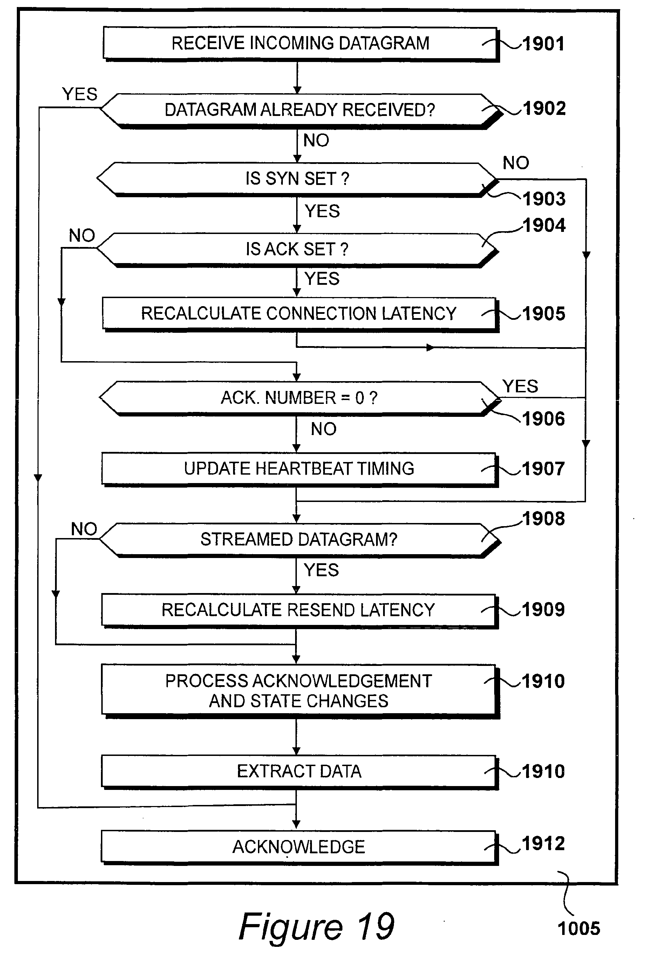

*Figure 19* details process **1005** that receives datagrams sent by PDA **511.** At step **1901** an incoming datagram is received and the receive time logged. A question is then asked at step **1902** as to whether the datagram has a sequence number identical to a recently received datagram of the same type (ie streamed or transactional). This can happen when acknowledgements and resends "cross" and when acknowledgements are lost over the network. Thus if this question is answered in the affirmative then control is directed to step **1912** and the datagram is acknowledged without being processed. Alternatively, if it is answered in the affirmative, then at step **1903** a question is asked as to whether the SYN field **1202** is set, indicating that the datagram is a latency-measurement datagram. Thus if this question is answered in the affirmative then at step **1904** a further question is asked as to whether ACK field **1203** is also set. If this question is also answered in the affirmative then the datagram is a returned latency-measurement datagram and so the latency is calculated at step **1905.**

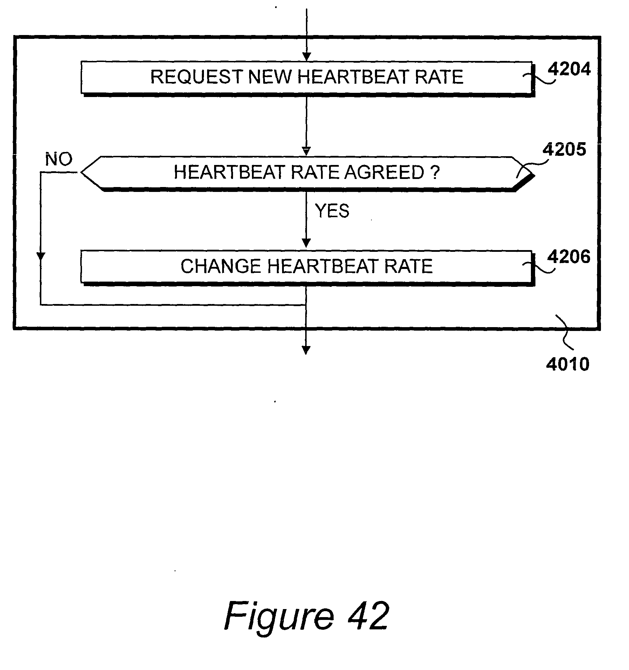

Alternatively, if it is answered in the negative, then at step **1906** a question is asked as to whether the acknowledgement number field **1212** is zero. If this question is answered in the affirmative then the ACK field is not set but an acknowledgement number is given. This indicates that the acknowledgement field does not contain a sequence number but indicates a new heartbeat rate, measured in milliseconds, and thus the heartbeat timing rate contained in the session data **804** is updated at step **1907.** This process will be described further with reference to *Figure 42.*

Following either of steps **1907** or **1905,** or if either the question asked at step **1903** is answered in the negative or that asked at step **1906** is answered in the affirmative, then control is directed to step **1908,** at which a question is asked as to whether the datagram contains streamed data, as indicated by the setting of STREAM field **1205.** If this question is answered in the affirmative then the resend latency is recalculated at step **1909.** Resend latency, in combination with connection latency, is used to estimate the age of data received, and is described further with reference to *Figure 41*.

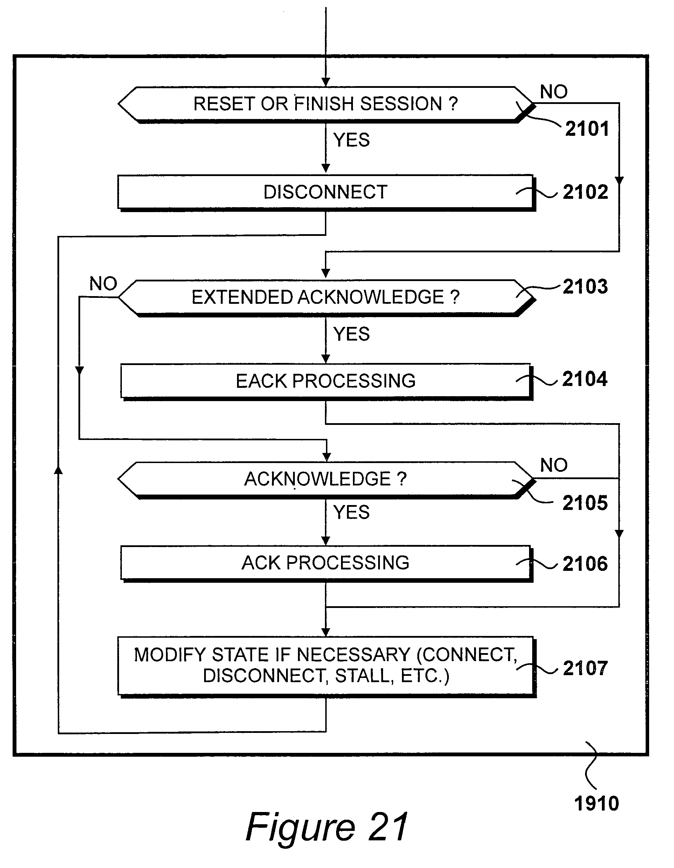

Following this, or if the question asked at step **1908** is answered in the negative, acknowledgements and state changes are processed at step **1910,** as will be further described with reference to *Figure 21.*

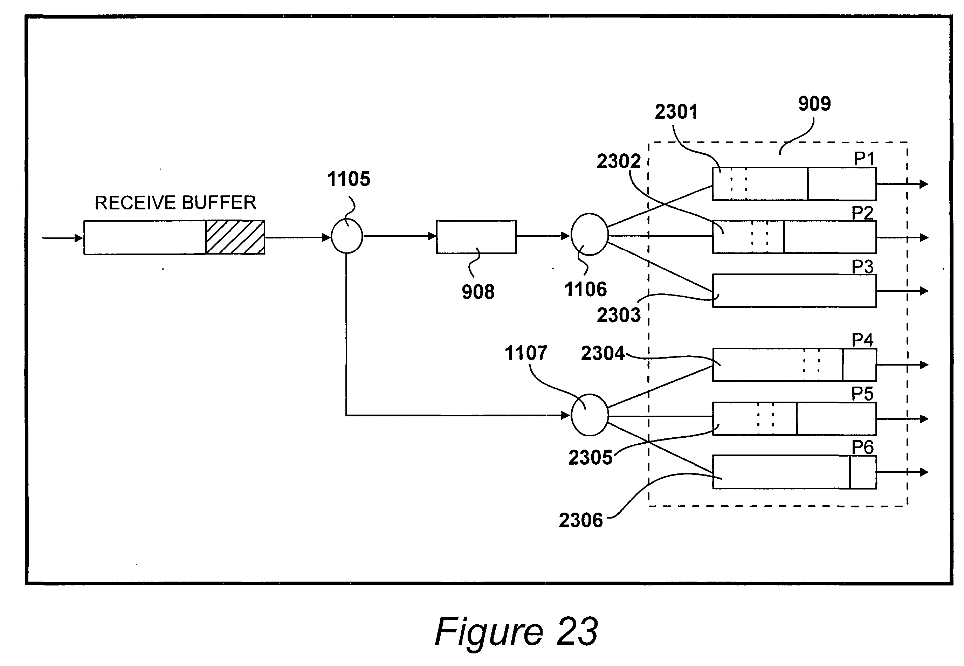

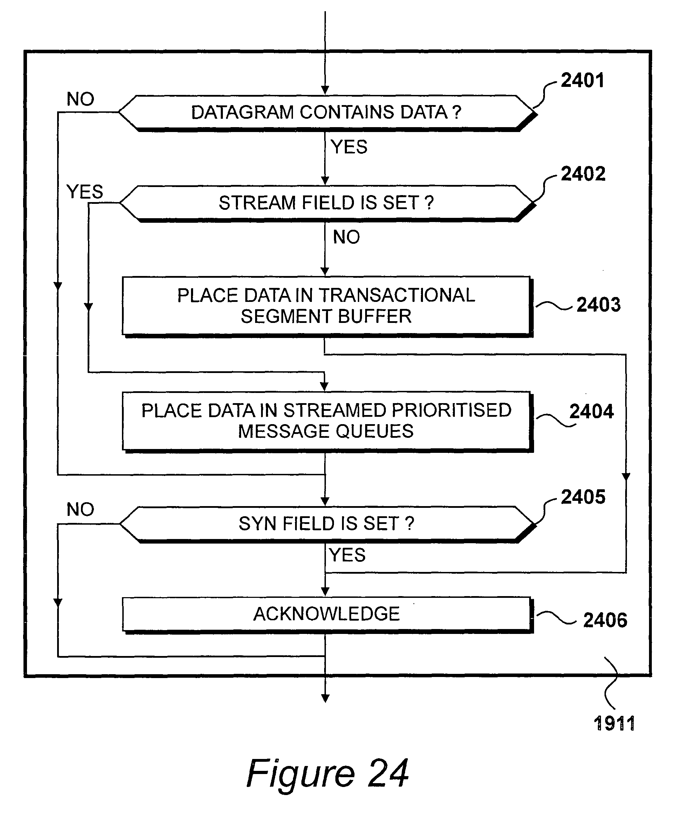

Finally the data **1106** is extracted at step **1911,** as will be further described with reference to *Figure 23* and *Figure 24* and the datagram acknowledged at step **1912.** The processing steps **1901** to **1910** relate only to the information contained within the MTP header **1105,** much of which is not connected with the data in any way.

### Figure 20

*Figure 20* illustrates the use of the SYN field **1202** to measure connection latency. It is necessary that at all times the client terminals are aware of exactly how old the data is. This is not possible using traditional methods such as, for example, clock synchronisation, because there may be thousands of terminals. Thus the system described herein provides a method of measuring the connection latency between the RTDP **101** and each of its terminals.

A latency-measurement datagram is sent at regular intervals by setting the SYN field **1202** in an outgoing datagram in either transactional segment buffer **905** or streamed segment buffer **906** and noting the time at which it was sent. As an example, transactional segment buffer **905** is shown, containing several packets **2001, 2002** and **2003.** The question asked at step **1805** is answered in the affirmative, to the effect that a latency measurement should be initiated, and so the SYN field **1202** of the next datagram to be sent, which is datagram **2001,** is set.

Datagram **2001** takes a number of milliseconds, shown by arrow **2004** and identified by the variable A, to be transmitted to PDA **511,** whose receive buffer **2005** is shown. A process running on PDA **511,** which is substantially identical to process **1005,** sets the SYN field **1202** and the ACK field **1203** in its next outgoing datagram **2006.** This process takes a time indicated by arrow **2007** and identified by the variable B. Finally, transmission of datagram **2006** back to real time data server **502** takes a time indicated by arrow **2008** and identified by the variable C. When datagram **2002** is received at real time data server **502** the fact that both the SYN and ACK fields are set triggers latency calculation at step **1905.**

The round trip time, which is obtained by comparing the receive time of datagram **2002** with the transmission time of datagram **2001,** is equal to the sum of the variables A, B and C. Since network conditions are, on average, symmetric, A is assumed to be approximately equal to C. B is very small because it is possible to directly acknowledge packet **2001** without waiting for any out-of-order datagrams that would have to be received if the latency was measured using a cumulative acknowledgement, as with TCP. Thus, as shown by equation **2006,** the two-way latency is approximately equal to the round trip time, and the one-way latency, or connection latency, is half the round trip time.

Having obtained a value for the round trip time, it is filtered using equations **2007.** K is an adaptive filter coefficient that is varied in order to optimise the ability of the filtered latency to follow quick changes when these are consistently observed. Thus the filtered latency is equal to the sum of the following factors: K subtracted from one all multiplied by the measured latency; and K multiplied by the previous filtered latency calculation. Other filtering or weighting methods may be used in order to smooth the variability of the latency calculation.

The round trip time is used by both the server and the client to determine the length of time that should be waited for an acknowledgement before a transactional datagram is resent (timeout). Since streamed datagrams may be acknowledged using an extended acknowledgement, the time that a process waits before sending an extended acknowledgement is added to the latency value to produce the timeout for streamed datagrams. The constant measurement of the latency described above ensures that the timeout settings are as accurate as possible. A fixed timeout setting can be set too high, in which case the wait before resend would be too long, thus degrading the timeliness of the data, or it can be too low, resulting in too many resends. This dynamic timeout creates a compromise.

The round trip time may be halved to give a connection latency, which indicates the approximate time taken by a datagram to be sent from the server to the client. This value is used by the client to indicate the timeliness of received data, and will therefore be described further with reference to *Figure 41.* Resend latency measurement, which will be described with reference to *Figure 41,* is also calculated at both the client and the server end but in this embodiment is only used by the client. It will therefore not be discussed at this stage.

### Figure 21

*Figure 21* details step **1910** at which acknowledgements and state changes are processed. At step **2101** a question is asked as to whether the RESET field **1208** or FINISH field **1209** (as contained in the MTP header **1105** of the datagram received at step **1901)** is set, indicating that the session should be reset or ended. If this question is answered in the affirmative then a disconnect takes place at step **2102.** This concludes step **1910** if this route is taken.

If the question asked at step **2101** is answered in the negative then at step **2103** a question is asked as to whether EACK field **1204** is set, indicating that the datagram contains an extended acknowledge. If this question is answered in the affirmative then at step **2104** the extended acknowledgement is processed. If it is answered in the negative then at step **2105** a further question is asked as to whether ACK field **1203** is set, indicating that the datagram contains an acknowledgement. If this question is answered in the affirmative then at step **2106** the acknowledgement is processed by removing the datagram that has the sequence number contained in SEQUENCE NUMBER field **1211** from the relevant segment buffer **905** or **906.** If it is answered in the negative, or following step **2104,** the session state variables **902** for PDA **511** are modified if necessary.

### Figure 22

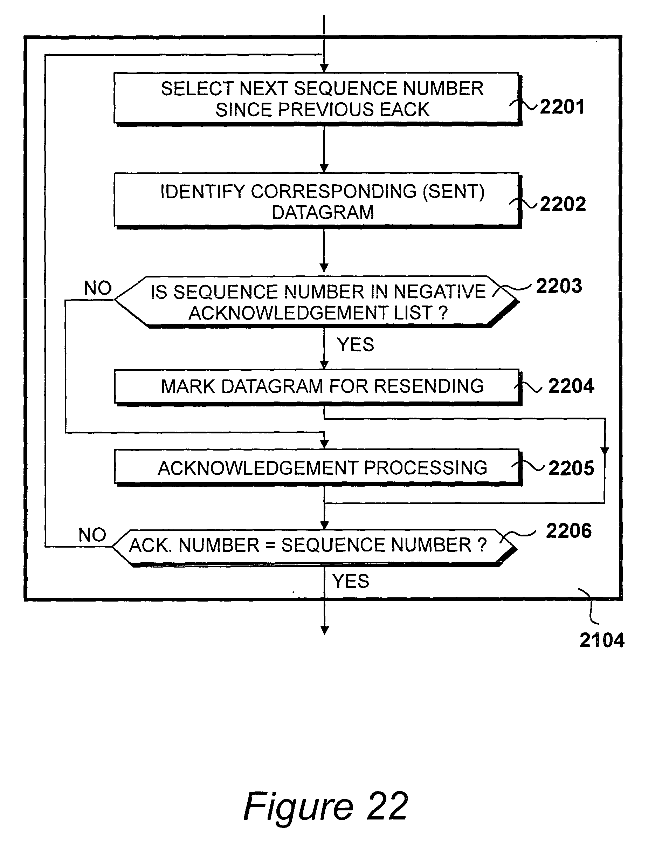

*Figure 22* details step **2104,** at which an extended acknowledgement is processed. As described previously with reference to step **1804,** an extended acknowledgement is in the form of a datagram with EACK field **1204** set, a streamed datagram sequence number contained in acknowledgement number field **1212,** and possibly a list of streamed datagram sequence numbers that have not been received by PDA **511** as data **1106.** Thus the process has a range of datagram sequence numbers to consider. This range starts at the number following the sequence number contained in the last extended acknowledgement and finishes at the number contained in the extended acknowledgement currently being considered.

Thus at step **2201** the first sequence number in this range is selected. At step **2202** the streamed datagram corresponding to this sequence number is identified and at step **2203** a question is asked as to whether the sequence number identified at step **2201** is in the list of negatively acknowledged datagrams contained in data **1106** of the datagram. If the question is answered in the negative then the sequence number is being acknowledged and this is processed at step **2205.** If the question is answered in the affirmative then, since the identified datagram is still stored in its relevant segment buffer **905** or **906,** it is marked to be resent at step **2204.**

At step **2206** a question is asked as to whether the sequence number being considered is the same as the number contained in the acknowledgement number field **1212** of the datagram. If this question is answered in the negative then control is returned to step **2201** and the next sequence number is selected. If, however, it is answered in the affirmative, then the extended acknowledgement has been fully processed and step **2104** is completed.

### Figure 23

*Figure 23* illustrates the reception of a datagram from PDA **511.** A receive buffer is provided by the operating system **801,** which supplies a datagram to receiving transactional segment buffer **908** or to process **1007,** via process **1005.** Once datagrams are ordered within transactional segment buffer **908,** process **1006** decodes the level two message headers in the datagrams to split the data up and place it in the correct one of prioritised message queues **910.** There are three transactional queues **2301, 2302,** and **2303,** corresponding to the message queues **1402** to **1404.** Process **1007** performs the same function for streamed datagrams. There is no streamed segment buffer for incoming datagrams because there is no ordering necessary. There are three streamed queues **2304, 2305** and **2306.** These correspond to the prioritised message queues **1405** to **1407.** Once the data is placed in the queues, level one headers indicate to the applications that a message is complete and can be used.

In the alternative embodiment described with reference to *Figure 16,* wherein mixing of the data is not used, only the transactional data need be ordered in the segment buffer **908.** In this embodiment every streamed message is contained in a single datagram and so need not be ordered. If an old update arrives after a new one then the old one is simply discarded by the relevant application. However transactional data, which usually stretches over more than one datagram, must be ordered. The START and END fields **1206** and **1207** are used to indicate when a message is finished and can be transferred to the relevant message queue.

### Figure 24

*Figure 24* details step **1911,** at which the data contained in a received datagram is extracted and acknowledged. At step **2401** a question is asked as to whether the received datagram contains data in portion **1106.** If this question is answered in the negative then a further question is asked at step **2402** as to whether STREAM field **1205** is set, indicating that the datagram contains streamed data. If this question is answered in the negative then at step **2403** the data is placed in transactional segment buffer **908,** while if it is answered in the affirmative then the data is passed to process **1007** at step **2404.**

Following step **2404,** or if the question asked at step **2401** is answered in the negative, to the effect that the datagram contains no data, then a question is asked at step **2405** as to whether SYN field **1202** is set, indicating that the datagram is a latency measurement or heartbeat datagram. If this question is answered in the affirmative, or following step **2403,** the datagram is immediately acknowledged at step **2406.** This step involves flagging the sequence number in order that process **1003** acknowledges it in the next available outgoing datagram at step **1707** as described with reference to *Figure 18.* (If there is no outgoing datagram, then an empty streamed datagram is created.) At this point, or if the question is answered in the negative, step **1911** is concluded. Thus transactional and latency-measurement datagrams are acknowledged immediately. Streamed datagrams are acknowledged using an extended acknowledgement, and empty datagrams that are not tagged, for example an acknowledgement containing no data, are not themselves acknowledged.

### Figure 25

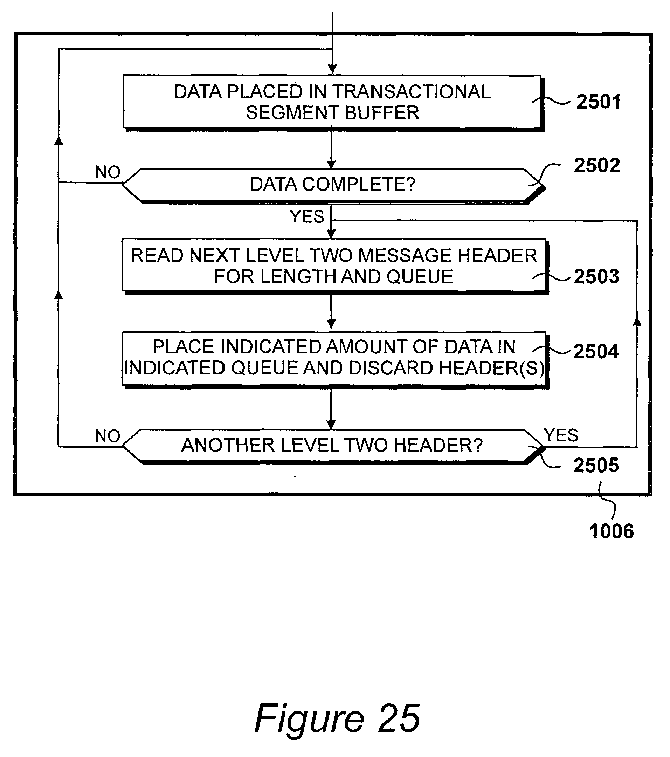

*Figure 25* details process **1006** which processes the datagrams placed in the transactional segment buffer **908.** At step **2501** a question is asked as to whether there is data in the transactional segment buffer, and if this is answered in the negative then the question is asked again until it is answered in the affirmative, when at step **2502** a question is asked as to whether the first datagram in the segment buffer has the next expected sequence number and is complete (as described with reference to *Figure 12,* a datagram can be split over more than one datagram, and if this happens then the full set of datagrams must be received before they can be processed). If this question is answered in the affirmative then the datagram can be processed, and at step **2504** the first level two message header in the datagram is read to obtain the length of the data following it and the message queue into which it is to be placed. The indicated amount of data is then removed from the segment buffer and placed in the correct queue at step **2505,** with the level two header and MTP header being discarded. At step **2506** a question is asked as to whether there is another level two header, and if this question is answered in the affirmative then control is returned to step **2504.** If it is answered in the negative, or if the question asked at step **2503** is answered in the negative, to the effect that the next datagram in segment buffer **908** is not the next expected one, control is returned to step **2501** and the process waits for more data.

### Figure 26

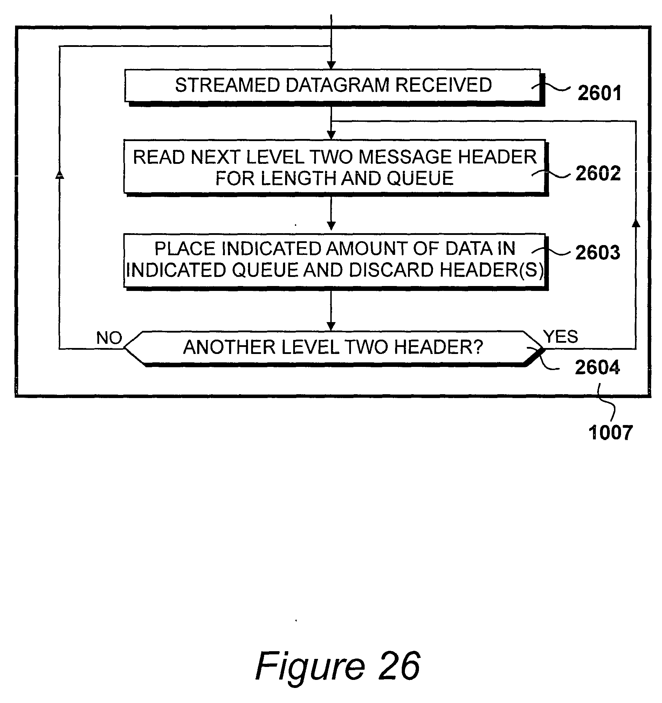

*Figure 26* details process **1007,** which processes incoming streamed datagrams. Since streamed datagrams do not have to be ordered, there is no necessity for an incoming streamed segment buffer. Thus at step **2601** a streamed datagram is received from process **1005,** and at step **2602** the first level two message header in the datagram is read to obtain the length of the data following it and the message queue into which it is to be placed. The indicated amount of data is then removed from the datagram and placed in the correct queue at step **2603,** with the level two header and MTP header being discarded. At step **2604** a question is asked as to whether there is another level two header, and if this question is answered in the affirmative then control is returned to step **2602.** If it is answered in the negative, control is returned to step **2601** and the process waits for more data.

### Figure 27

*Figure 27* details background processing process **1008.** (This process is suspended on the server if the session is stalled. It is never suspended on the client.) At step **2701** the process considers whether or not a latency-measurement datagram needs to be sent. If so, a flag is set which triggers the question asked at step **1805,** as to whether such a datagram should be sent, to be answered in the affirmative. It also triggers the question asked at step **1702** as to whether a heartbeat datagram is needed, which is asked only if both segment buffers are empty, to be answered in the affirmative. Thus if there is an outgoing datagram at the point where a latency-measurement datagram is required, then that datagram has its SYN field **1202** set. However, if there is no outgoing datagram then process **1003** creates one at step **1703.** This is referred to as a heartbeat, but it is also a latency-measurement datagram. (It is also possible to use the KAL field **1213** as a heartbeat. A datagram with this field set is not acknowledged and not used as a latency-measuring datagram, but merely indicates that the connection is open.)

At step **2702** the process negotiates a new heartbeat rate, if required. This is the maximum interval that should pass without data being sent on either the server or client side. If no data is sent, then a heartbeat datagram, which is an empty streamed datagram with the SYN field **1202** set, is sent. The server does not send heartbeats during stalling of a session. This is achieved by the suspension of process **1008** when a session is stalled. The negotiation of a heartbeat rate, although available to both client and server, is in this embodiment predominantly initiated by the client and will therefore be described with reference to *Figure 42.*

At step **2703** the process flags the necessity for an extended acknowledgement, if one is due, which leads to the question asked by process **1003** at step **1803** being answered in the affirmative. At step **2704** the process marks for resending any datagrams that have not been acknowledged within a timeout, and are thus still within their respective segment buffer **905** or **906.** This is done by flagging the datagram for resending, and it also increments the value in resend field **1119** by one, to indicate the number of times the datagram has been resent.

At step **2705** the process updates the timeouts based on connection characteristics. The timeout for a transactional datagram is equal to (or slightly larger than) the round trip time calculated at step **1905.** The timeout for a streamed datagram is equal to (or slightly larger than) the round trip time calculated at step **1905** plus the time that the process will wait before sending an extended acknowledgement.

At step **2706** the process recalculates the data transmission rate, if necessary. This recalculation is done at specified intervals, and thus may not be carried out on every cycle.

At step **2707** the process sends an update of network characteristics to the application server, for use by the applications. In this embodiment this update includes the amount of data currently being sent per second (in datagrams or in bytes), the amount of data in the segment buffer that has the most data, or alternatively in both segment buffers, and the round trip time; in other embodiments the update could include more or less information.

Control is then returned to step **2701** and the process cycles until terminated.

### Figure 28

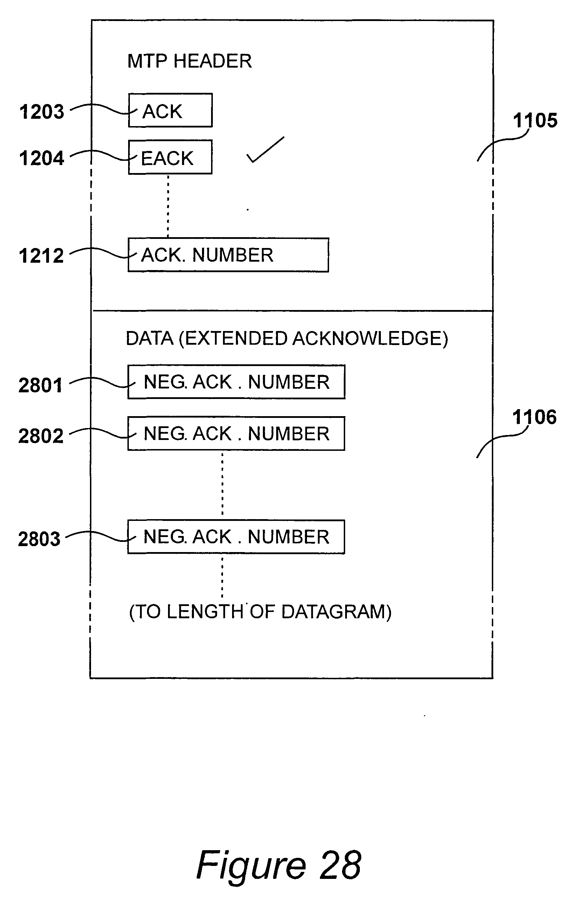

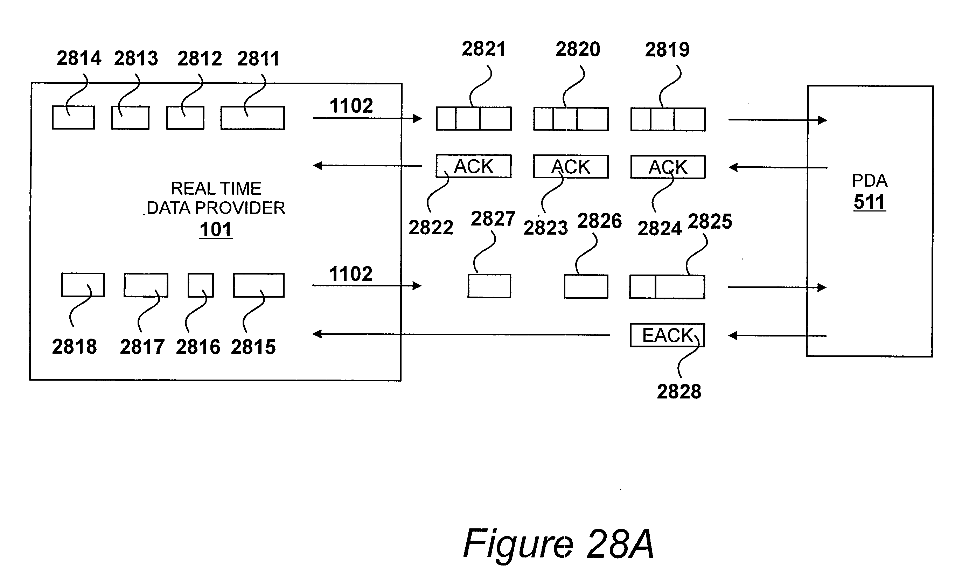

*Figure 28* illustrates an extended acknowledgement. The MTP header **1105** and data **1106** of a datagram are shown. In the header **1105** the EACK field **1204** is set. The acknowledgement number field **1212** contains the sequence number of the most recent streamed datagram received. The data portion **1106** contains a list of sequence numbers **2801, 2802** and **2803** that are lower than the number contained in field **1212** but which have not been received. The datagrams corresponding to these numbers are therefore negatively acknowledged.

### Figure 28A

*Figure 28A* illustrates two of the different ways in which transactional and streamed data is treated. The word data is herein applied to all kinds of data, including the information received from feeds **503** to **507,** the messages containing the information produced by application server **501** and the datagrams that contain a part or whole of these messages produced by real time data server **502,** the messages received by a terminal and the information displayed by that terminal to the user.

Application server **501,** part of real time data provider **101,** produces transactional messages **2811, 2812, 2813** and **2814** and streamed messages **2815, 2816, 2817** and **2818.** Process **1102** on real time data server **502** sends these messages to a terminal such as PDA **511** in the form of datagrams. Transactional messages **2811** to **2814** are split and sent as part of datagram **2819, 2820** and **2821.** For example, datagram **2819** may consist of a part of message **2811,** a part of message **2812** and a part of message **2814.** Streamed messages **2815** to **2818** are not split. Thus datagram **2825** consists of the whole of messages **2815** and **2816.** Datagram **2826** consists of message **2817.** The whole of message **2818** cannot also fit into the datagram, and so it is sent even though it is not at the maximum size. Datagram **2827** contains message **2818.** Thus transactional messages may be split over at least two datagrams, while streamed messages must be contained within a datagram.

Another difference in the treatment of transactional and streamed data is the method of acknowledgement. Thus each of transactional datagrams **2819** to **2821** is individually acknowledged using acknowledgements **2822, 2823** and **2824.** However, streamed datagrams **2825** to **2827** may be acknowledged by PDA **511** using a single extended acknowledgement **2828,** unless they are control datagrams that have a field such as SYN **1202,** RESET **1208** or FINISH **1209** set, in which case they are individually acknowledged.

### Figure 29

*Figure 29* details step **2706,** at which the data transmission rate is calculated by updating the transmission interval (the time that process **1003** waits after sending a datagram before sending another datagram). Although each of the streamed and transactional data being sent from the RTDP **101** to each of its clients is relatively small in data terms, it must be provided in a timely fashion. Congestion should therefore be avoided. Existing protocols such as TCP merely react to congestion rather than preventing it, and as shown in *Figure 4* have a very slow restart when a connection is cut off.

This problem is solved by having a separate transmission rate for each terminal, and constantly monitoring each of these rates to keep it optimum. Thus at step **2901** a question is asked as to whether the interval since the last update is less than the product of 1.25 and the round trip time calculated at step **1905.** If this question is answered in the negative then it is not yet time to perform the calculation and step **2706** is concluded. This is because the effect of a previous update to the transmission rate is not felt until at least one round trip time later, and thus the calculation interval is a small amount more than the round trip time - a quarter of the round trip time in this embodiment.

However, if the question is answered in the affirmative then at step **2902** the total number of resends in the streamed segment buffer **906** is determined and set as the value of a variable R. The number of resends is a sum of the number of datagrams in the buffer that are tagged to be resent, with an indication that a datagram is on its second resend adding two to the total, an indication that a datagram is on its third resent adding three to the total, and so on.

At step **2903** a question is asked as to whether the value of R is zero, meaning that there are no datagrams in the buffer that are being resent. This indicates that the rate of transmission can be increased. Thus if this question is answered in the affirmative then a further question is asked at step **2904** as to whether the current interval between transmissions is significantly larger than a value saved as the "current best interval". If this question is answered in the affirmative then the transmission interval is decreased by a first, larger amount at step **2905,** while if it is answered in the negative then the transmission interval is decreased by a second, smaller amount at step **2906.** This means that when the transmission interval is much larger than the last known achievable interval, the transmission interval is decreased much faster than when it is close to it.

If the question asked at step **2903** is answered in the negative, to the effect that R is not zero, then at step **2907** a question is asked as to whether R is less than a certain threshold. If this question is answered in the affirmative then the transmission rate is not changed. If, however, it is answered in the negative then a further question is asked at step **2908** as to whether R is significantly smaller than the previous value of R. If this question is answered in the affirmative then the rate is not altered, even though R is above the threshold, because this value of R may be an anomaly.

If R is above the threshold and not significantly smaller than the previous R, then this indicates that there are too many resends and the interval between datagram transmissions needs to be increased. However, first a question is asked at step **2909** as to whether the last change in the interval was a decrease. If this question is answered in the affirmative then the current transmission interval is the lowest known achievable interval at the current time, and so it is saved as the current best at step **2910.** The transmission interval is then increased at step **2911** (the step size used in this embodiment is larger than both of the step sizes used for decreasing the transmission interval).

The algorithm described herein is a robust method of attempting to increase the rate of datagram transmissions while minimising the number of resends, using continual and rapid adjustment. It provides a quick response to decreases in the available network bandwidth and a fast restart when transmission is temporarily cut off or after a congestion spike. Clearly the implementation details of the algorithm, such as the number of step sizes and what is meant by "significantly large" could be changed.

In this embodiment, due to the small receive buffer of PDA **511,** it is only possible to send one datagram at a time. However, in other embodiments, the method could be altered by sending more than one datagram at once when the transmission interval reaches a certain low threshold. It can be more efficient to send two packets at once at a larger interval than to continue decreasing the transmission interval.

Additionally, in another embodiment it could be the transactional segment buffer or both segment buffers that are considered when summing the resends.

### Figure 30

*Figure 30* details process **1009,** which performs session maintenance. This process notes certain information available in the headers of datagrams as they arrive and maintains the client sessions accordingly, but does not interfere with the processing of the datagrams. Thus at step **3001** a datagram is received, and at step **3002** a question is asked as to whether the datagram header contains valid session details, for example session number, encryption and so on.

If this question is answered in the negative, meaning either that the datagram has no session number or that it contains invalid session details, then at step **3003** a further question is asked as to whether the datagram is requesting a new session, indicated by the lack of a session number and the setting of SYN field **1202.** If this question is answered in the affirmative then at step **3004** a new session is created for the client that sent the datagram. This includes creating session data **803** and validating the new session, ie checking whether a valid account number for an active account, valid name and correct password have been supplied, and is in practice performed by calling a subroutine on application server **501,** on which the user details are stored.

An answer in the negative to the question asked at step **3003** means that there is a problem of some kind with the datagram, for example it relates to a terminated session or the session details do not match, and so the session is ended at step **3012** by sending a reset datagram (a datagram in which the RESET field **1108** is set) to the originating IP address and removing the session data, if there is any.

If the question asked at step 0**3002** is answered in the affirmative, to the effect that the session details are valid, then a further question is asked at step **3005** as to whether the IP address from which the datagram was sent matches the IP address held in the session variables. If this question is answered in the negative then at step **3006** the IP address is updated in the session variables. The client could change IP addresses for a number of reasons. The main ones are that a client that has moved between networks or cells, thus changing its mobile IP address, or that a client deliberately terminated its IP connection in order to fully use bandwidth for another function, for example to make a telephone call. In this case the client would probably be assigned a different IP address on reconnection, even if it is in the same cell of the same network. However, this functionality of MTP allows the client to immediately restore the session without visible delay to the user.

At step **3007** a question is asked as to whether the datagram is terminating the session, indicated by a setting of FINISH field **1209.** If this question is answered in the affirmative then the session is ended at step **3012,** but if it is answered in the negative then at step **3008** a question is asked as to whether another datagram has been received for this session within two timeouts and if is answered in the affirmative then control is returned to step **3001.** This timeout is different from the resend timeouts discussed with reference to *Figure 27*, and is set by the heartbeat rate. The heartbeat rate is the maximum interval which should pass without receiving data from a client.

Thus, if the question is answered in the affirmative, indicating that since the receipt of the last datagram a period of time equal to two timeouts has passed with no further communication from the client, then at step 3009 the session is placed in a stalled state. This involves noting in the session variables that the session is stalled, which prevents any more datagrams from being sent to the client. In this embodiment, this involves suspending datagram reception process **1104** and background processing process **1109.** A stalled session can occur because the network connection to the client has been broken, because the PDA **511** does not currently require the real time data and has therefore stopped communicating, because the PDA **511** has been switched off without ending the session, and so on.

At step **3010** a question is asked as to whether a datagram has been received for this session within ten minutes of the session being placed in a stalled state, and if this question is answered in the affirmative then the stall is ended and control is returned to step **3001.** Ending a stall involves changing the session state and restarting any suspended processes. This will then have the effect of resending any datagrams that have not been acknowledged. However, in an altemative embodiment the streamed data buffer **906,** and possibly the streamed message queues **1405** to **1407,** could be flushed on the ending of a stall.

If, however, the question asked at step **3010** is answered in the negative then at step **3012** the session is ended. The session is closed after a long stall firstly for security measures, because the user may have left his terminal unattended, and secondly to prevent memory space being used for an unwanted session, for example if the terminal has been switched off.

Stalling as described above solves the problem with spoofing - that on reconnection the telecoms gateway sends a large amount of data all at once to the terminal, thus negating any value obtained by managing data transmission rate as described with reference to *Figure 29*. Instead, when the connection is broken and the real time data server **502** stops receiving datagrams from PDA **511** the session is stalled and the real time data server **502** sends no more datagrams. Thus the telecoms gateway builds up a very small amount of data, if any, to send on when the connection is re-established.

The second problem solved here is the maintenance of a session when the PDA **511** moves between cells in a telecoms network or indeed between networks. As soon as an incoming datagram that has the correct session ID and encryption but a different IP address is received, the IP address in the session data **804** is immediately updated so that datagrams intended for PDA **511** are sent to that IP address. The user therefore perceives very little, if any, delay when moving between IP addresses.

### Figure 30A

The updating of IP addresses described with respect to step **3006** is illustrated in *Figure 30A.* A session is described by its session data **804** stored on application server **501.** It includes a session ID field **901** containing a session ID **3020** and an IP address field **3021** containing an IP address **3022.** The session may be in an active state or may move to a stalled state, as shown by arrow **3023,** when no communication is received from the client within two timeouts as set by the heartbeat rate.

A datagram **3024** is received by real time data server **502.** It includes a source IP address field **1112** in its IP header **1103** and a session ID field **1210** in its MTP header **1210.** The session ID **3020** matches the session ID in field **901.** However, the IP address **3025** does not match the IP address **3021** in the IP header **3022.** The session data **804** is therefore updated immediately by replacing the IP address in field **3021** with IP address **3025.** All datagrams produced are now sent to this new address. Receipt of datagram **3024** also ends any stall, if one existed, and so the session is shown as active.

### Figure 31

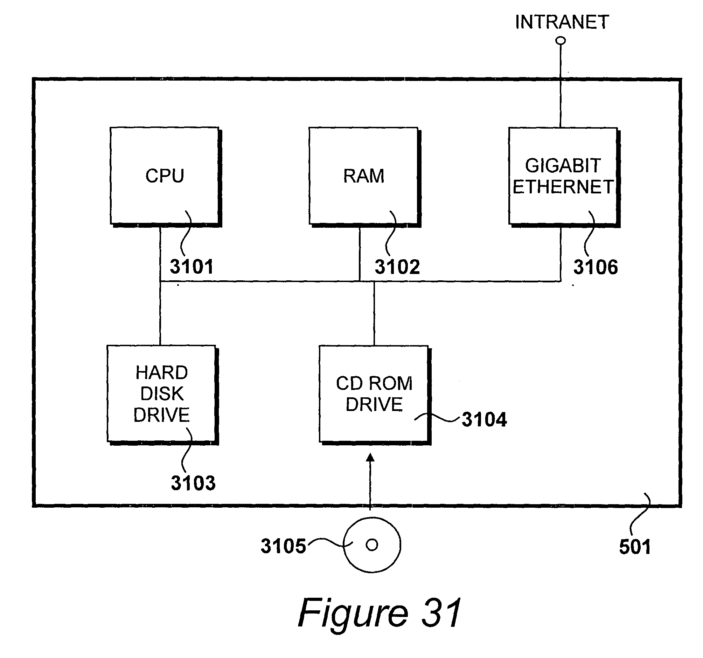

*Figure 31* details application server **501.** It comprises a central processing unit (CPU) **3101** having a clock frequency of 3GHz, a main memory **3102** comprising 2GB of dynamic RAM and local storage **3103** provided by a 130GB disk array. A CD-ROM disk drive **3104** allows instructions to be loaded onto local storage **3103** from a CD-ROM **3105.** A Gigabit Ethemet card **3106** facilitates intranet connection to the real time data server **502** and the feeds **503** to **507.**

### Figure 32

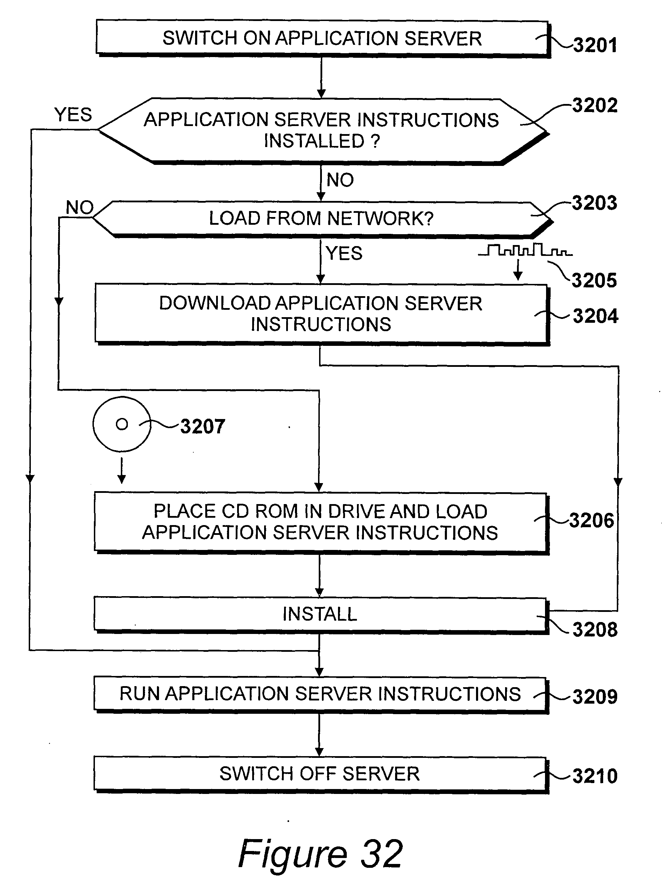

*Figure 32* details steps carried out by application server **501.** At step **3201** the application server **501** is switched on and at step **3202** a question is asked as to whether the necessary instructions are already installed. If this question is answered in the negative then at step **3203** a further question is asked as to whether the instructions should be loaded from the intranet. If this question is answered in the affirmative then at step **3204** the instructions are downloaded from a network **3205.** If it is answered in the negative then at step **3206** the instructions are loaded from a CD-ROM **3207.**

Following either of steps **3204** or **3206** the instructions are installed at step **3208.** At this point, or if the question asked at step **3202** is answered in the negative, the instructions are executed at step **3209.** At step **3210** the application server is switched off. In practice this will happen very infrequently, for example for maintenance.

### Figure 33

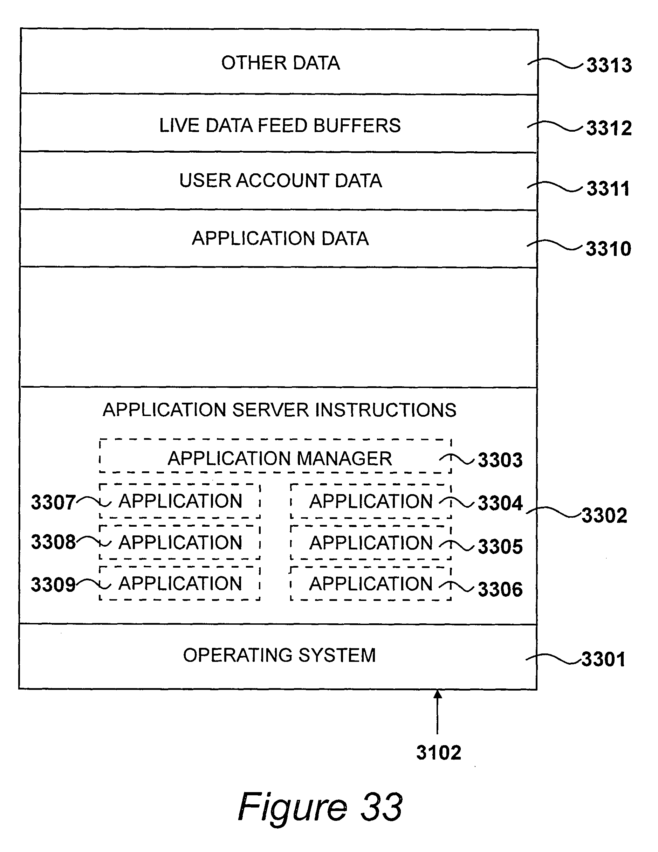

*Figure 33* details the contents of memory **3002** during the running of application server **501.** An operating system **3301** provides operating system instructions for common system tasks and device abstraction. The Windows™ XP™ operating system is used. Alternatively, a Macintosh™, Unix™ or Linux™ operating system provides similar functionality. Application server instructions **3302** include an application manager **3303** and applications **3304, 3305, 3306, 3307, 3308** and **3309,** including an application for each of data feeds **503** to **507.** Application data **3310** is data used by the applications **3304** to **3309** and user account data **3311** comprises details of users' accounts, including the validation data information required when starting a session. Live data feed buffers **3312** are buffers for feeds **503** to **507.** Other data includes data used by the operating system and application server instructions.

### Figure 34

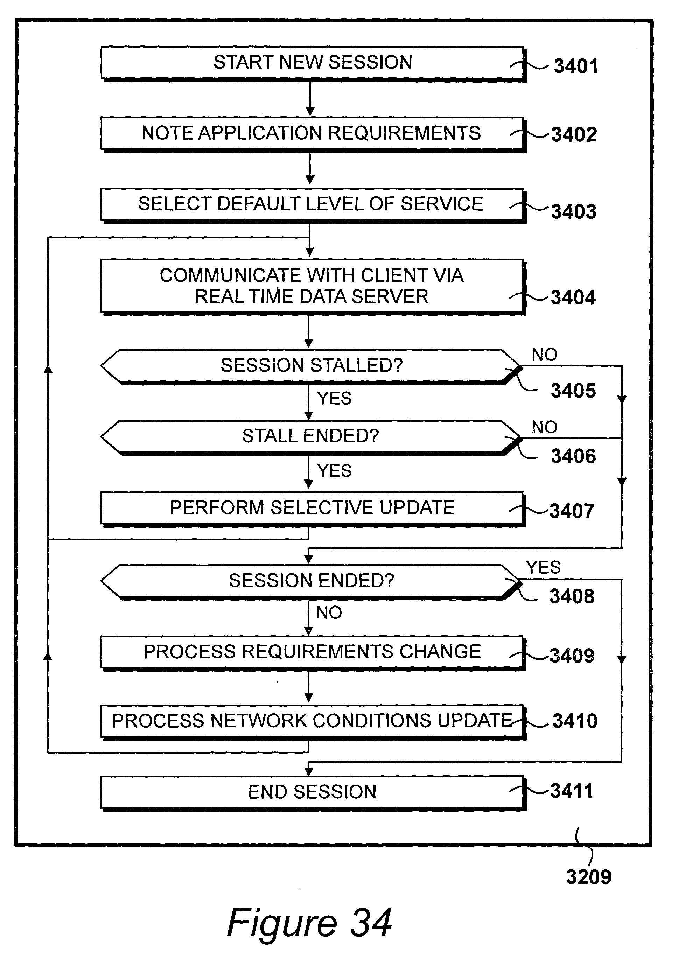

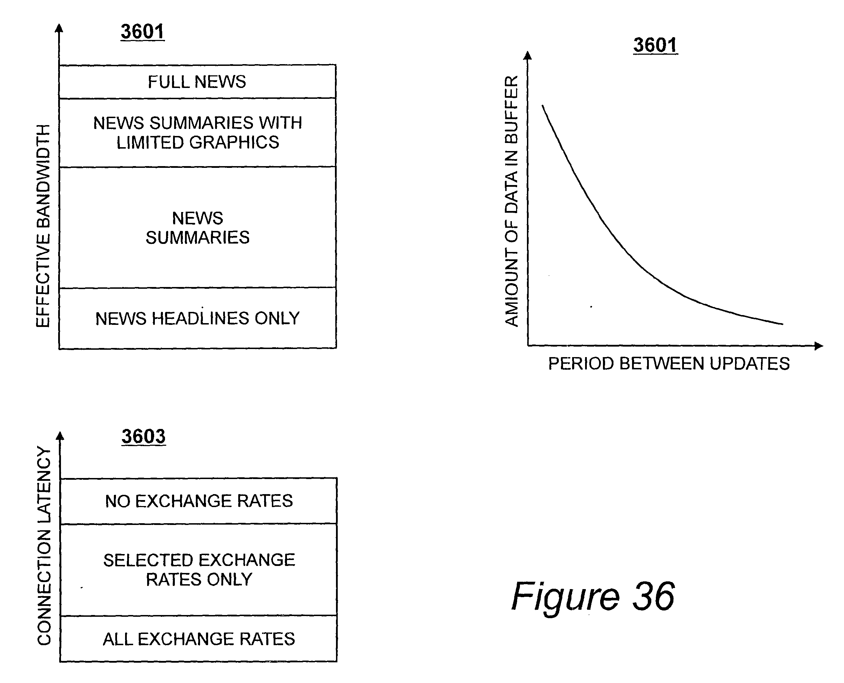

*Figure* 34 details the instructions executed by application manager **3303** at step **3209.** At step **3401** a client logs on successfully to start a session, and at step **3402** the user's application requirements, as stored in his account, are noted. These include the exact data in which the user is interested, for example stocks updates and news stories. At step **3403** a default level of service is selected, which is also retrieved from the user account. Levels of service will be discussed further with reference to *Figure 36*.

At step **3404** the application server **501** communicates with the client via real time data server **502** by sending messages. The content of these messages is determined by the user's application requirements and the current level of service.

At step **3405** a question is asked as to whether the session is stalled, which will be indicated to the application server **501** by real time data server **502,** and if this question is answered in the affirmative then at step **3406** a question is asked as to whether the stall has ended. If this question is answered in the affirmative then at step **3407** a selective update of data is performed and control is returned to step **3404.** While the session is stalled, the application server **501** does not send any messages to real time data server **502.**

If either of the questions asked at steps **3405** or **3406** is answered in the negative, to the effect that the session is not stalled or that the stall has not ended, then at step **3408** a further question is asked as to whether the session has ended. If this question is answered in the affirmative then the session ends at step **3411.** If, however, it is answered in the negative then at step **3409** any change in application requirements received from the client via real time data server **502** is processed, and at step **3410** any received network conditions update is processed to change the level of service, if necessary. Control is then returned to step **3404.**

Although this process is described here in terms of a single client and session, the skilled user will appreciate that step **3209** involves application server **501** performing these steps for every session.

### Figure 35

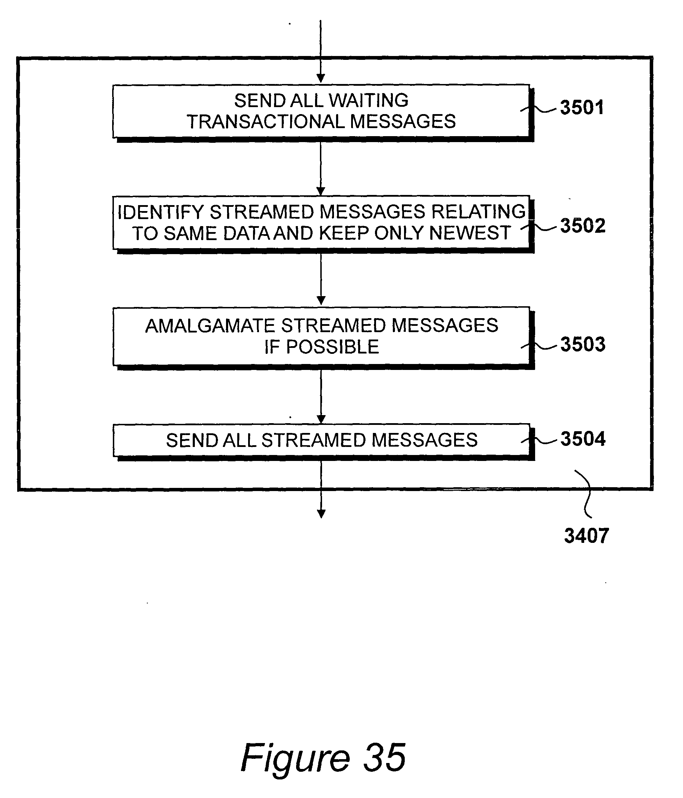

*Figure 35* details the selective update performed at step **3407.** At step **3501** all waiting transactional messages are sent. At step **3502** the waiting streamed messages are examined to identify messages that relate to the same data. If any are found, then the older ones are deleted. This means that if during a stall two or more updates have been produced for the same data, as is particularly likely with stock prices, then only the newest update is sent. At step **3503** concatenation of messages is performed if possible. This means that updates for data that have the same priority level could be amalgamated into one message, instead of being sent as individual messages. Finally, at step **3504,** the streamed messages are sent.

Thus, on a selective update, transactional messages are all sent, whereas only the newest streamed data is sent in order to avoid overloading the network and the client.

Thus there is herein described a method of re-establishing a transmission of data from a first station, such as RTDP **101,** to a second station, such as PDA **511.** Transmission of data from RTDP **101** to PDA **511** is paused following an indication that a communication session is inactive. RTDP **101** receives an indication to the effect that the inactive session has been re-established and that data is to be transmitted and sends to PDA **511** only a portion of data that has not been sent during said pause in transmission.

### Figure 36

As described with respect to *Figure 27*, the real time data server **502** periodically supplies to application server **501** updates of certain network condition indicators, which in this example comprise the current effective bandwidth, given by the amount of data being sent per second, the amount of data in one or more buffers, and the current round trip time. (in this sense, network includes the real time data server and the client, as well as the Internet, mobile telephony network or LAN, or any other networks in between.) The values of these indicators provide to the application server **502** information regarding the amount of data that can be sent to this client. The applications **3304** to **3309** then use this information to determine how much information of what type should be sent and at what speed.

*Figure 36* thus illustrates different ways in which the level of service can be changed. Graph **3601** shows how a news application supplies different information dependent upon the effective bandwidth measurement supplied. When the effective bandwidth is low, then only news headlines are supplied. More effective bandwidth allows news summaries to be supplied, while even more allows limited graphics. When the effective bandwidth is very high, the full stories are sent. This is an example of how the level of service sets the type of data sent.

Graph **3602** shows how a stock prices application could increase the interval between sending messages as the amount of data in the buffers increases. The application can then supersede data that is waiting to be sent with a newer update to the same data, and amalgamate messages if necessary. This is an example of how the level of service sets the amount of data sent.

Graph **3603** shows how an exchange rate application could stop sending updates altogether if the connection latency is too high, send only some exchange rates if the connection latency is about normal, and send all the rates that the user is interested in if the latency gets very low. This could be valuable if the user has indicated that he does not want to trade on, and is therefore not interested in, certain exchange rates if the latency is known to be above a certain threshold. This is an example of how the amount and type of data sent could be set by the level of service.

These graphs are only examples of ways in which network condition indicators could be used to vary the level of service. The exact way in which the level of service varies depends upon the application requirements of the user, the particular type of application, the data that the application supplies, and so on. Also, although these graphs indicate thresholds and linear correlations, the network conditions could be used so that an increase or decrease in a value triggers an increase or decrease in level of service, such that a particular value does not necessarily indicate a particular level of service. The values of two or more network condition indicators could be combined to indicate whether the level of service should increase or decrease. Additionally, the application manager **3303** could make the necessity to consider network conditions more binding on some applications than others.

Thus MTP provides an additional advantage over other protocols. Because of its management of transmission rate, as described with reference to *Figure 29*, networks with high bandwidth and low latency are used just as effectively as those with low bandwidth and high latency, but if network conditions are better then more information is sent. Thus if, for example, the user of PDA **511** moves into transmission range of WiFi gateway **118** and the PDA detects this and starts using WiFi instead of a telecoms network, not only does the session maintenance described with reference to *Figure 30* enable the session to be continued seamlessly over the higher capacity network, but the user may immediately perceive a higher level of service, depending upon the application being used. Thus the protocol makes the best possible use of low bandwidth and high latency connections, but also provides high bandwidth, low latency users with a high level of service and perceived functionality.

### Figure 37

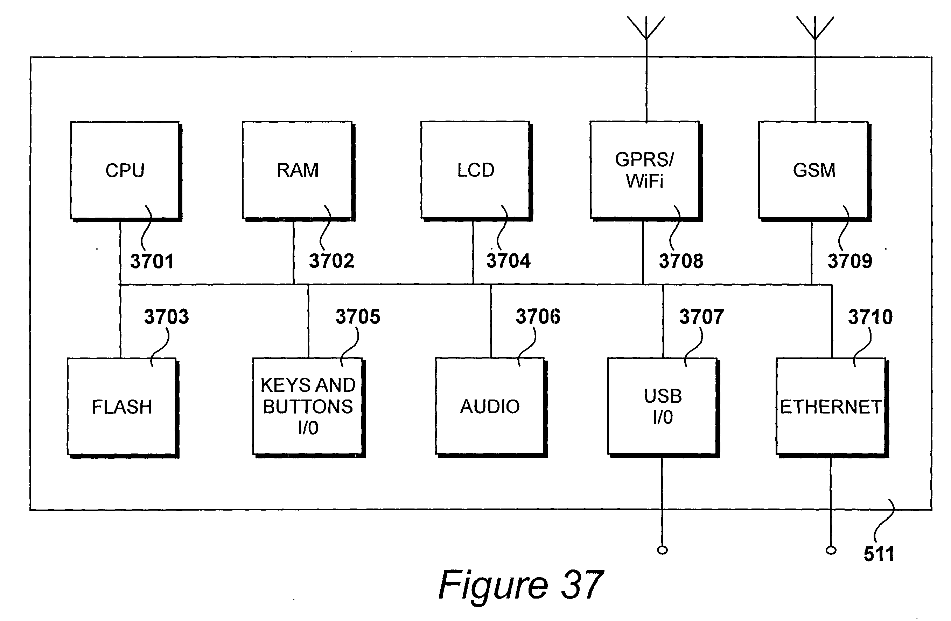

*Figure 37* details PDA **511.** As described above, this is an example of a terminal that could be used in a system embodying the invention. It includes a CPU **3701** with a clock speed of 370 megahertz (MHz) with memory **3702** being provided by 64 megabytes (MB) of RAM. 256MB of nonvolatile FLASH memory **3703** is provided for program and data storage. Liquid crystal display **3704** is used to display information to the user. Input/output **3705** processes the input of the keys and buttons **513** while audio input/output **3706** provides a microphone and speaker interface for use with the telephone facility. Universal Serial Bus (USB) input/output **3707** is used to connect PDA **511** to another computer, or to the Internet **110** via a wired connection. GPRS/WiFi connection **3708** and GSM connection **3709** enable PDA **511** to connect to wireless networks, while Ethemet card **3710** enables PDA **511** to connect to a wired network, for example via a docking station on a computer.

### Figure 38

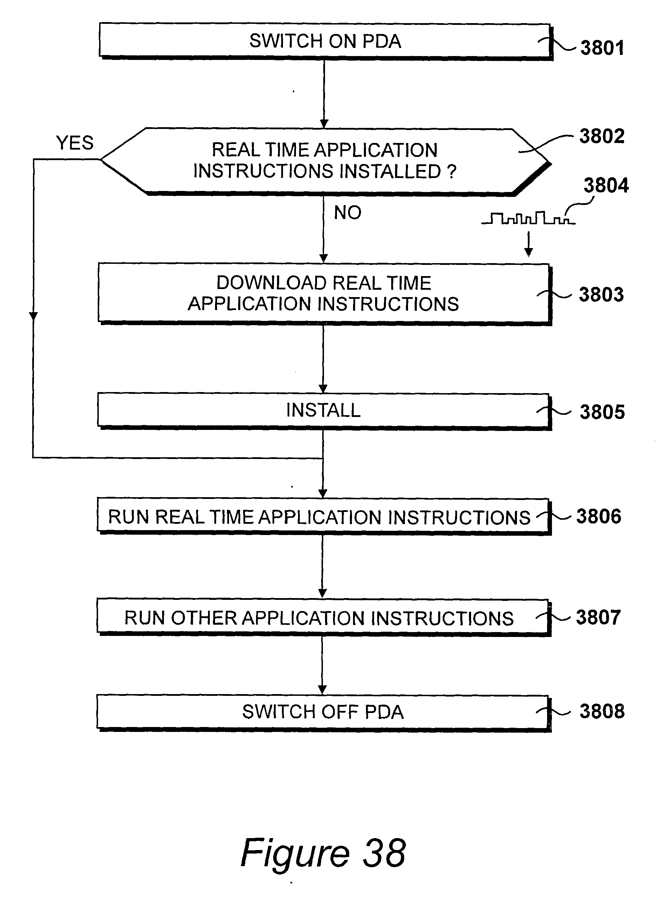

*Figure 38* details steps carried out by PDA **511.** At step **3801** PDA **511** is switched on and at step **3802** a question is asked as to whether the real time application instructions are already installed. If this question is answered in the negative then at step **3803** the instructions are downloaded from a network **3804.** The instructions are then installed at step **3805.**

At this point, or if the question asked at step **3802** is answered in the negative, the instructions are executed at step **3806.** Instructions for other applications on PDA **511** are executed at step **3807.** At step **3808** the PDA is switched off.

### Figure 39

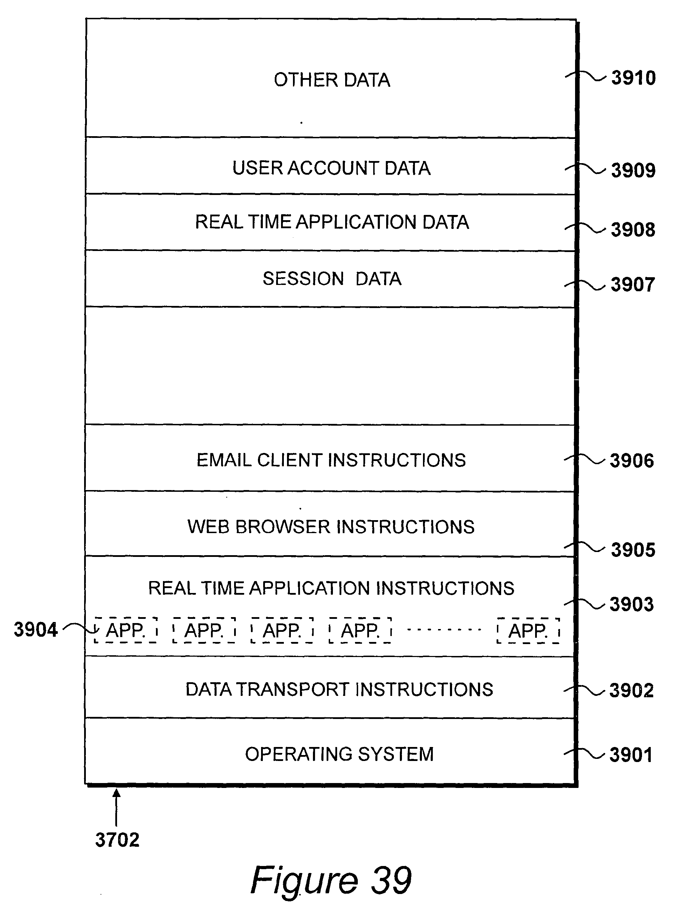

*Figure 39* details the contents of memory **3702** during step **3806.** An operating system **3901** provides operating system instructions for common system tasks and device abstraction. The Windows™ CE™ operating system is used, but a different PDA-suitable operating system could be used. Data transport instructions **3902,** substantially like those described for the real time data server **502** except that there is only a single session, include MTP instructions. Real time application instructions **3903** include individual real time applications such as financial data application **3904.** Application **3904** takes information provided via datagrams into a message queue and displays it on display **3704** according to its interface and user setups. For example, it may provide stocks prices in a grid with news headlines scrolling along the bottom.

Web browser instructions **3905** and email client instructions **3905** are provided. These applications could also use MTP to communicate via the real time application provider **101.** RTDP **101** can forward information from and to a third party using TCP and from and to a terminal using MTP. This emphasises that the protocol described herein for providing real time data could be used for communication of many types.

Session data includes segment buffers, priority buffer and state variables as shown for session data **804** in *Figure 9*. Real time application data **3908** is data used by the application instructions **3903** and user account data **3909** comprises the user's password, name, billing details and so on. Other data includes data used by the operating system and other applications.

### Figure 40

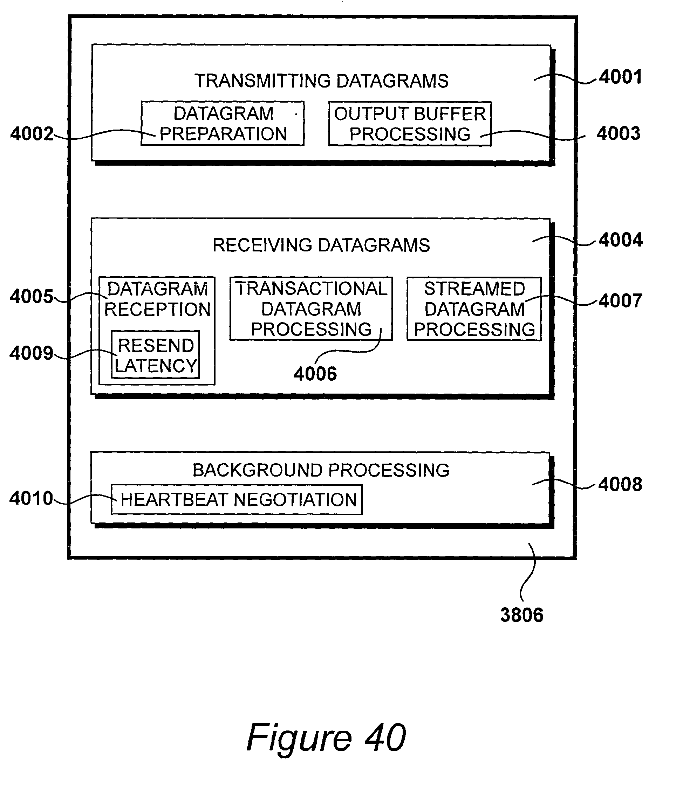

Since MTP is a substantially symmetrical protocol there is no need to describe in detail much of the real time application instructions executed at step **3806.** Datagrams are produced, transmitted and received in substantially the same way as the processes described with reference to *Figure 10.* Thus, as shown in *Figure 40,* step **3806** where the client runs the application instructions comprises the following processes running substantially in parallel. Process **4001** transmits datagrams from the client **511** to the real time data server **502.** It comprises two separate processes: datagram preparation **4002** and output buffer processing **4003.** Processes **4002** and **4003** are substantially identical to processes **1002** and **1003** respectively.

Process **4004** receives datagrams from the real time data server **502** and comprises three separate processes: datagram reception **4005,** transactional datagram processing **4006** and streamed datagram processing **4007.** These processes are substantially identical to processes **1005, 1006** and 1007 respectively.

Process **4008** performs background processing. This is similar to process **1008,** except that process **4008** has no step corresponding to step **2707,** at which the real time data server **502** informs the application server **501** of the network conditions. The only substantial difference between the client and the server is that the client does not perform a process corresponding to session maintenance **1009.**

An additional difference is that, in general, a session will be requested and terminated by the user of PDA **511.**

Datagram reception process **4005** includes step **4009,** at which a resend latency value is calculated, and background processing **4008** includes step **4010,** at which a heartbeat rate is negotiated. These steps correspond to steps **1909** and **2702** respectively. Although the facility for these steps exists on both the real time data server **502** and PDA **511,** in practice, in this embodiment, it is only PDA **511** that uses them. They are thus described in *Figure 41* and *Figure 42* respectively.

### Figure 41

*Figure 41* illustrates resend latency measurement. This is the delay caused by having to resend a datagram, as opposed to the connection latency which is the delay caused by the network. Packets sent across the Internet **110** are not guaranteed to arrive, which is why an additional protocol like MTP must be used to ensure eventual delivery. When an MTP datagram gets "lost", meaning that it is not acknowledged, it will be resent. The data it contains, therefore, is more out-of-date than it would have been had it arrived first time. This resend latency is calculated at step **4009.**

In *Figure 41* the original datagram **4101** is transmitted and fails to be delivered. After a time, either through a lack of acknowledgement or a negative acknowledge, the real time data server **502** will resend the datagram. The resent datagram **4102** is also lost. A third attempt **4103** is successful.

Each datagram contains an elapsed time field **4104.** In datagram **4101** this is set to zero. In datagram **4102** it is the difference between the transmission time of datagram **4102** and the transmission time of datagram **4101;** similarly for datagram **4103.** Thus, for example, the elapsed time field for datagram **4103** is 421 milliseconds.

When a resent datagram is received the resend latency is recalculated using a smoothing filter on the elapsed time. If no datagrams are received at all then the resend latency is gradually increased. This occurs in this embodiment once a heartbeat period has passed with no receipt of datagrams. However, receipt of any datagram, including transactional datagrams and empty streamed datagrams, will at this point decrease the latency, since it implies that the reason for non-receipt of streamed data may be that there is no data to send, and thus the last received updates may still be current.

The resend latency is added to the connection latency to give the application latency. This is the actual time delay of the data displayed to the user on PDA **511.** Thus the timeliness of the data, according to a function of the length of time taken to reach the client and the possible number of resends it required, is displayed to the user to allow him to make a decision regarding whether or not to use the data. Optionally, when the application latency falls below a certain threshold the screen may "grey out" and transactions may be suspended.

### Figure 42

*Figure 42* details step **4010,** at which the PDA **511** negotiates a new heartbeat rate with real time data server **502.** The heartbeat rate is the maximum interval that is allowed to pass without sending data, both by the server and by the client. If no data has been sent at the end of this interval then an empty streamed datagram is sent. In this embodiment, this is combined with the connection latency measurement by sending the latency measurement datagram at intervals which are the same as the heartbeat rate. If the server does not receive any data from the client for an interval substantially equal to twice the heartbeat interval, then the session will stall. The client, however, does not stall a session on non-receipt of data, but continues to send data, or heartbeats if there is no data. A heartbeat is in this embodiment usually a latency-measurement datagram, but could be an empty datagram with the KAL field **1213** set.

Since latency measurements are sent at the heartbeat rate, the latency is more accurate when the heartbeat is faster. This means that when the user is, for example, trading, the heartbeat should be fast, whereas when he is browsing news stories the heartbeat should be slow. Thus the heartbeat negotiation is triggered by events that occur when the PDA **511** switches applications, minimises or maximised applications or enters a particular state in an application.

At step **4201** a new heartbeat rate is requested by sending a datagram that has SYN field **1202** set and a number in acknowledgement number field **1212,** but does not have ACK field **1203** set. At step **4202** a question is asked as to whether the heartbeat rate has been agreed by receiving an acknowledgement of this datagram. If this question is answered in the negative then the heartbeat rate is not changed. Alternatively, if the heartbeat rate is agreed, the rate is changed at step **4203.**

Associated with this is the possibility that the client may at any time change its application requirements. For example, on minimising of the display of stock prices the client may, using a transactional datagram, change its application requirements to stop the transmission of stock prices. On using the telephone, which requires as much bandwidth as possible, the client may change its application requirements to cease all transmission of streamed data. When the user returns to the display of stocks then the application requirements can be changed again to indicate that the default requirements apply. However, even when no streamed data is being sent, the client and server continue to send latency measurements at the agreed heartbeat rate. This indicates not only that the connection is still active but allows an immediate display of latency when the user returns to the display of streamed data.

## Claims

1. A method of re-establishing a transmission of data from a first station to a second station, comprising the steps of
pausing transmission of data from said first station to said second station following an indication that a communication session is inactive;
receiving an indication to the effect that the inactive session has been re-established and that data is to be transmitted;
sending, from said first station to said second station, only a portion of data that has not been sent during said pause in transmission.

2. A method according to claim **1,** wherein said indication that said communication session is inactive is provided by receiving an indication from said second station to the effect that the communication session is inactive but still operational.

3. A method according to claim **1,** wherein said indication that said communication session is inactive is provided by non-receipt at said first station of an anticipated transmission.

4. A method according to any of claims **1** to **3,** wherein said transmitted data consists of transactional data and streamed data; and
said step of sending a portion of said data comprises the steps of:
sending all transactional data that has not been already sent;
sending streamed data that has not been superseded by other streamed data.

5. A method according to claim **4,** wherein said step of sending a portion of said data further comprises the step of:
amalgamating at least two messages of streamed data into a single streamed message.

6. A server for transmitting data packets to at least one terminal, wherein said server is configured to re-establish a transmission to a terminal, comprising the steps of
pausing transmission of data from the server to a terminal following an indication that a communication session is inactive;
receiving an indication to the effect that the inactive session has been re-established and that data is to be transmitted; and
sending to said terminal only a portion of the data that has not been sent during said paused transmission.

7. A server according to claim **6,** wherein said indication that said communication session is inactive is provided by receiving an indication from said terminal to the effect that the communication session is inactive but still operational.

8. A server according to claim **6,** wherein said indication that said communication session is inactive is provided by non-receipt at said server of an anticipated transmission.

9. A server according to claim **6,** wherein said transmitted data consists of transactional data and streamed data and said server is configured to send said data by
sending all transactional data that has not been already sent; and
sending streamed data that has not been superseded by other streamed data.

10. A server according to claim **9,** wherein said server is configured to send a portion of said data by amalgamating at least two messages of streamed data into a single streamed message.

11. A server according to claim **6,** configured to transmit data packets to a plurality of terminals.

12. A server according to claim **6** configured to communicate with a terminal embodied as a mobile terminal or radio device.

13. Instructions executable by a network of computers and/or programmable data processing devices such that when executing said instructions stations connected to said network will transmit data packets over said network and said network will perform the steps of
pausing transmission of data from a first station to a second terminal following an indication that a communication session is inactive;
receiving at said first station an indication to the effect that the inactive session has been re-established and that data is to be transmitted to said second station; and
sending from said first station to said second station only a portion of the data that has not been sent during said pause in transmission.

14. Instructions executable by a combination of a server and mobile terminal connected to said server by a radio network such that when executing and instructions said combination performs the steps of
pausing transmission of data from said server to a terminal following an indication that a communication session is inactive;
receiving at said server an indication to the effect that the inactive session has been re-established and that data is to be transmitted to said terminal; and
sending from said server to said terminal only a portion of the data that has not been sent during said pause in transmission.

15. A computer readable medium having computer readable instructions executable by a computer such that when executing said instructions a computer will perform the steps of
pausing the transmission of data to a networked device following an indication that a communication session is inactive;
receiving an indication to the effect that the inactive session has been re-established and that data is to be transmitted; and
sending to said previously inactive networked device only a portion of the data that has not been sent during said pause in transmission.

16. A computer readable medium having computer readable instructions according to claim **15** such that when executing said instructions a computer will perform the step of receiving an indication from a networked device to the effect that the communication session is inactive but still operational.

17. A computer readable medium having computer readable instructions according to claim **15** such that when executing said instructions a computer will perform the step of identifying the non-receipt of an anticipated transmission indicating that a communication session is active.

18. A computer readable medium having computer readable instructions according to claim **15** such that when executing said instructions a computer will perform the step of sending a portion of said data by
sending all transactional data that has not been already sent; and
sending streamed data that has not been superseded by other streamed data.
